# EUROPÄISCHE PATENTSCHRIFT

(11) **EP 3 391 503 B1**
(45) Veröffentlichungstag und Bekanntmachung des Hinweises auf die Patenterteilung: **16.11.2022**
(21) Anmeldenummer: 17701636.7
(22) Anmeldetag: 20.01.2017
(51) Int. Cl.: H02J 7/02, A63B 24/00, A63B 37/00, A63B 43/00, H02J 50/10

(54) **MOBILE LADESTATION SOWIE SYSTEM ZUR ORTUNG EINES GOLFBALLS**
MOBILE CHARGING STATION AND SYSTEM FOR LOCATING A BALL GAME DEVICE
STATION DE CHARGE MOBILE ET SYSTÈME DE LOCALISATION D'UN ACCESSOIRE DE JEU DE BALLE

(30) Priorität: 22.01.2016 DE 102016000694
(43) Veröffentlichungstag der Anmeldung: 24.10.2018
(73) Patentinhaber: Zilles, Renatus, 56626 Andernach (DE); Jürges, Lennart, 50937 Köln (DE)
(72) Erfinder: Zilles, Renatus, 56626 Andernach (DE); Jürges, Lennart, 50937 Köln (DE)
(74) Vertreter: von Tietzen und Hennig, Nikolaus
(86) Internationale Anmeldenummer: PCT/EP2017/000075
(87) Internationale Veröffentlichungsnummer: WO 2017/125249

(56) Entgegenhaltungen:
- WO-A1-91/13655
- WO-A1-2008/100430
- US-A1- 2002 091 017
- US-A1- 2004 142 766
- US-A1- 2010 227 705
- US-A1- 2011 074 345
- US-A1- 2011 077 094

## Beschreibung

Die Erfindung betrifft eine mobile Ladestation für ein Ballspielgerät, insbesondere in Form eines Golfballes, sowie ein System zur Ortung eines Ballspielgerätes.

Bei vielen Ballsportarten kann es für Sportler von Interesse sein, aktuelle Positionsinformationen von dem eingesetzten Ballspielgerät zu erhalten, dies gilt insbesondere für solche Sportarten, bei denen das Ballspielgerät über große Distanzen durch den Spieler bewegt bzw. geschlagen wird. Das Interesse an diesen Daten kann unterschiedliche Gründe haben und reicht von der einfachen Ortung des Spielgerätes um es wiederzufinden, bis hin zur komplexen Analyse des Bewegungsprofils. Hier besteht neben dem Interesse an den genauen Ortungsinformationen auch Bedarf an weitergehenden Informationen wie Beschleunigung, Drehgeschwindigkeit um die Ballachse, Bewegungsgeschwindigkeit, Flugrichtung und -höhe, etc..

Insbesondere im Golfsport verbringen Golfer einen Großteil der Spielzeit damit, ihren zuvor geschlagenen Ball auf der Spielbahn zu suchen. Im Schnitt werden pro 18-Loch-Runde 24 Minuten Suchzeit pro Spieler aufgebracht. Dies ist für den suchenden Spieler und seine Mitspieler nicht nur frustrierend, es hemmt auch die Spielfreude, da schnellere und meist bessere Spieler aufrücken und unterbewusst Druck auf die Suchenden ausüben. Auch für die Golfplatzbetreiber bedeutet dies finanzielle Einbußen, da er ansonsten mehr Flights starten könnte. Des Weiteren ist auch der finanzielle Aspekt, der sich durch den wiederkehrenden Verlust des Ballspielgerätes ergibt, nicht vernachlässigbar. Ein durchschnittlicher Golfball kostet 2 bis 3 Euro, so dass sich in Summe nicht unerhebliche Beträge summieren können. Dabei gehen weltweit jährlich ca. 800.000.000 Golfbälle auf Golfplätzen verloren.

Existierende Findersysteme beschränken sich auf das Finden des Golfballs und sind durch die zusätzlich benötigte komplexe Hardware, wie spezielle Golfbälle oder ein Peilgerät teuer, proprietär, umständlich in der Nutzung und ungenau in der Ortung. Insbesondere war es bisher problematisch, die benötigte Hardware für die Ortung des Golfballes in den nur sehr begrenzt verfügbaren "Bauraum" innerhalb des Golfballes zu integrieren. Auch stellt die ausreichende Energieversorgung der benötigten Elektronik während einer vollständigen Golfrunde auf einem 18-Loch-Platz eine nicht zu unterschätzende Voraussetzung dar, da die Spielzeit in Abhängigkeit von der Spielstärke und Größe des Flights zwischen 3,5 bis 6 Stunden Dauer beträgt.

Aus der WO 91/13655 A1 ist bereits ein mobiles Handgerät zur Positionserfassung eines Golfballs bekannt, das gleichzeitig zum Laden eines internen Energiespeichers des Balls dient. Die Ortung des Golfballs erfolgt mittels eines getakten Peilsignals, das durch das Handgerät empfangbar ist. Eine Kommunikation zwischen Handgerät und Golfball zum Datenaustausch ist jedoch nicht möglich.

Hohe Anforderungen werden zudem an die Datenübertragung vom Ballspielgerät an eine Auswertestation gestellt. Dies stellt, was die Entwickler bei manchen Sportarten, wie dem Golfspiel vor Probleme. Bei Abschlagsweiten von über 200m sind große Übertragungsstrecken notwendig. Herkömmliche Übertragungsstandards wie Bluetooth erfüllen zuvor genannte Übertragungsweiten oftmals nur unter Laborbedingungen, insbesondere wenn ein möglichst geringer Energieverbrauch gefordert wird. Gesucht wird daher nach Lösungen, die ein optimales System für die Ortung eines Ballspielgerätes, insbesondere eines Golfballes ermöglichen und daneben die Handhabung eines derartigen Systems für den Nutzer vereinfachen und somit praxistauglich machen.

Gelöst wird diese Aufgabe zum einen durch eine mobile Ladestation für wenigstens ein Ballspielgerät, insbesondere einen Golfball, gemäß den Merkmalen des Anspruch 1. Das Ballspielgerät kann eine Ballgröße von mindestens 40mm und maximal 50mm, idealerweise von mindestens 42,68mm haben. Das Gewicht des Ballspielgerätes beträgt bevorzugt maximal 50g, besonders bevorzugt maximal 45,93g. Im Folgenden wird zur Darstellung der Erfindung hauptsächlich auf einen Golfball als Ballspielgerät Bezug genommen. Die nachfolgend dargestellten Merkmale und vorteilhaften Ausgestaltungen lassen sich jedoch ohne Einschränkung für jedes denkbare Ballspielgerät einsetzen.

Die vorgeschlagene mobile Ladestation enthält wenigstens eine interne Energiequelle sowie wenigstens ein Aufnahmemittel zur Aufnahme und Fixierung wenigstens eines Ballspielgerätes mit integrierter Ortungselektronik. Die interne Energiequelle entspricht wenigstens einem internen Energiespeicher, aus dem elektrische Energie erfindungsgemäß für wenigstens ein aufgenommenes Ballspielgerät der Ladestation bereitgestellt werden kann. Die verfügbare Energie dient dazu, einen internen Energiespeicher des Ballspielgerätes durch die mobile Ladestation aufzuladen bzw. dessen integrierte Elektronik zumindest zeitweise mit Energie zu speisen.

Die Mobilität der Ladestation macht es für den Sportler äußert komfortabel, diese während der Ausübung der Ballsportart mitzuführen. Insbesondere für den Golfsport erweist sich die erfindungsgemäße mobile Ladestation als besonders vorteilhaft, da sich diese einfach mit der notwendigen Golfausrüstung mitführen lässt. Der Golfspieler kann während der Golfrunde zwischen den einzelnen Bahnen den Golfball in die mobile Ladestation einlegen, um diesen zwischenzeitlich aufzuladen. Die Spielrunde setzt er fort, indem er einen ausreichend aufgeladenen Golfball verwendet, den er wiederum austauschen kann, sollte die Energieversorung des Golfballs nicht mindestens für die nächste Spielbahn ausreichen. Lange Golfrunden stellen kein unüberwindbares Hindernis im Hinblick auf eine ausreichende Energieversorgung des Ballspielgerätes dar, da durchweg eine Zwischenaufladung mit Hilfe der mobilen Ladestation sichergestellt werden kann. Der Energiespeicher der Ladestation ist dabei derart dimensioniert, so dass dieser zumindest genug elektrische Energie für die Versorgung des Golfballs während einer Golfrunde bereitstellen kann.

Die Energietransmission von der Ladestation an das wenigstens eine aufgenommene Ballspielgerät erfolgt idealerweise kontaktlos, d.h. es sind keine zusätzlichen elektrischen Verbindungen notwendig, sondern es genügt, das Ballspielgerät in das dazu vorgesehene Aufnahmemittel einzulegen. Die Energietransmission kann induktiv erfolgen. Dazu umfasst die mobile Ladestation ein oder mehrere integrierte Induktionsspulen, die mit dem internen Speichermittel der Ladestation in Verbindung stehen, insbesondere ist pro Aufnahmemittel wenigstens eine Induktionsspule vorgesehen. Bevorzugt ist in diesem Zusammenhang eine Nahfeldübertragung mit resonant induktiver Kopplung.

Alternativ denkbar ist auch ein Ladungsprozess auf Basis von Energy Harvesting, bei dem die elektrische Energie aus dem Umfeld des Balls oder der Blackbox mit einem Energiewandler gewonnen wird. Dies kann bspw. per Ultraschall (z.B. uBeam) oder Vibration (bspw. micromems) geschehen. Bspw. kann eine Frequenzübermittlung mit 145dB bis 155dB mehrere Watt Leistung transferieren, ist von Menschen akustisch nicht wahrnehmbar und aus medizinischer Sicht ungefährlich für den menschlichen Körper.

Neben der erfindungsgemäßen Ladefunktion der mobilen Ladestation kommt dieser gemäß der Erfindung eine weitere wesentliche Aufgabe zu. Die Ladestation ist mit mehreren Kommunikationsmodulen ausgestattet, um eine bidirektionale Kommunikationsverbindung mit wenigstens einem Ballsportgerät aufbauen zu können. Dadurch lassen sich zum Einen Ortungsdaten des Ballspielgerätes über die Kommunikationsschnittstelle an die mobile Ladestation übertragen, und andererseits etwaige Daten und Informationen bzw. Steuerbefehle von der Ladestation an das Ballsportgerät übermitteln. Das Kommunikationsmodul bzw. die verwendete Übertragungstechnik sind dazu geeignet, große Distanzen zwischen Ladestation und Ballspielgerät in freier Natur, insbesondere auf einem Golfplatz, zu überwinden, Übertragungsstrecken größer 200m, vorzugsweise größer 250m und idealerweise größer 300m sind denkbar.

Gemäß der Erfindung umfasst die mobile Ladestation wenigstens ein weiteres Kommunikationsmodul, das gegenüber dem ersten Kommunikationsmodul mit einer abweichenden Übertragungstechnologie arbeitet. Das zweite Kommunikationsmodul dient zum Aufbau einer Kommunikationsübertragungsstrecke mit wenigstens einem Nutzerendgerät, beispielsweise einem mobilen Endgerät wie einem Smartphone, Tablet, Laptop, Wearable (Smartwatch), als auch einem stationären Gerät wie einem PC, externen Server, Cloud, etc. Erfindungsgemäß ist innerhalb der Ladestation eine Kopplung beider Kommunikationsmodule realisiert, so dass die mobile Ladestation eine Art Gatewayfunktionalität übernehmen kann, um Daten zwischen Nutzerendgerät und Ballsportgerät weiterleiten zu können.

Hierdurch ergibt sich eine Reihe von Vorteilen. Der Nutzer kann die empfangenen Daten des Ballspielgerätes mit seinem Nutzerendgerät, bspw. seinem mobilen Endgerät, das er vermutlich ohnehin auf dem Golfplatz mit sich trägt, empfangen und auswerten bzw. anzeigen lassen. Moderne Smartphones sind mit bekannten Kommunikationsmodulen ausgestattet, die auf WLAN- bzw. Bluetooth-Basis funken. Das zweite Kommunikationsmodul setzt vorzugsweise auf einen konventionellen Funkstandard, wie beispielsweise auf einen der bekannten und zukünftigen Bluetooth-Standards bzw. einem WLAN-Standard, bspw. IEEE 802.11,etc. Unter diesen Voraussetzungen ist die Kommunikationsverbindung zwischen Ladestation und Smartphone ohne weitere Hilfsmittel problemlos möglich.

Da die maximale Übertragungsstrecke dieser bekannten Funkstandards im Golfsport praxisuntauglich ist, wird durch die mobile Ladestation gemäß dieser vorteilhaften Ausgestaltung ein reichenweitenstarker Vermittler zwischen Nutzerendgerät und Ballspielgerät geschaffen, der regelmäßig auftretende Übertragungstrecken zwischen Endgerät und Ballspielgerät von mehr als 200m bzw. mehr als 300m zu überwinden weiß. Dazu setzt das verbaute erste Kommunikationsmodul der Ladestation auf eine abweichende Übertragungstechnologie, die mit derartigen Übertragungsdistanzen zurecht kommt und dennoch möglichst energieeffizient arbeitet. Als geeignet erweist sich beispielsweise ein erstes Kommunikationsmodul, das per Kurzstreckenfunk (SRD) arbeitet. Besonders vorteilhaft nutzt das erste Kommunikationsmodul ein ISM-Band für die Funkübertragung. Mit von Störsendern hervorgerufenen Interferenzen ist in der freien Umgebung, insbesondere auf einem Golfplatz, nicht zu rechnen. Die mobile Ladestation agiert somit als mobiler, reichweitenstarker Vermittler, der eine Bluetooth- oder WLAN-Funkverbindung mit einem Kurzstreckenfunk koppelt. Dabei ist zu erwähnen, dass die übertragenen Daten zwischen beiden Übertragungswegen nicht unmittelbar weitergeleitet werden müssen, sondern alternativ auch innerhalb der Ladestation zwischenspeicherbar sein können. Ein dafür benötigtes Speichermittel kann vorzugsweise in die Ladestation integriert sein.

Auch der Einbau eines GSM-Moduls, einer SIM-Karte bzw. einer E-SIM-Karte in die Ladestation ist vorstellbar, um die vom Ballspielgerät empfangenen Daten an einen Server oder ein sonstiges Endgerät, Nutzerendgerät weiterleiten zu können oder von diesen Daten zur Weiterleitung an den Golfball empfangen zu können.

Weiterhin ist es vorstellbar, dass weitere Kommunikationsmodule in die mobile Ladestation integrierbar sind. So beispielsweise Module für die NFC- oder RFID- bzw. UHF-Kommunikation. Damit lassen sich nicht nur Informationen von einem Ballspielgerät erfassen, sondern weiteres Sportequipment könnte mit geeigneten passiven oder aktiven Transpondern für die Identifizierung durch die Ladestation ausausgestattet sein. Denkbar ist es, das Golfbag inklusive der Golfschläger mit geeigneten Sendern auszustatten, um weitergehende Daten zur Aktivität des Sportlers erfassen zu können, d.h. es ist automatisch erfassbar, mit welchem Golfschläger der Spieler den Golfball geschlagen hat. Solche weitergehenden Daten sind für die nachfolgende Spielanalyse interessant und sollen daher von der Ladestation erfassbar sein und gegebenenfalls an ein Nutzerendgerät übertragbar sein.

Herausragend an der Ladestation ist deren Mobilität und die einfache Mitführbarkeit während der Ausübung der Sportart. Die Ladestation umfasst vorzugsweise etwaige Befestigungsmittel, um diese komfortabel am sonstigen Sportequipment und/oder an der Bekleidung befestigen zu können. Beispielsweise bei einer Ladestation für Golfbälle weist diese etwaige Klemmmittel auf, um die Ladestation an einem Golfbag stabil fixieren zu können. Denkbar ist auch die direkte Integration der mobilen Ladestation in die Sportausrüstung, bspw. in ein Golfkart bzw. einen Golfcaddy, oder doe direkte Integration in die Bekleidung des Spielers. Selbstverständlich kann die Ladestation auch fest in ein Golfbag integriert sein. Für die erfindungswesentliche Idee der vorliegenden Anmeldung ist es unerheblich, ob die mobile Ladestation fest oder lösbar am Sportequipment bzw. der Kleidung des Sportlers fixierbar ist, oder Bestandteil der Kleidung ist.

Die Ladestation umfasst erfindungsgemäß wenigstens ein Aufnahmemittel für wenigstens ein Ballspielgerät. Denkbar ist eine mechanische Ausgestaltung des Aufnahmemittels, um den Golfball mechanisch in der Ladestation aufzunehmen und stabil zu fixieren. Als vorteilhaft erweisen sich Haltemittel, die an die Form des Ballspielgerätes angepasst sind und eine klemmende Aufnahme ermöglichen. Denkbar sind auch Varianten mit Formschluss, beispielsweise durch ein betätigbares Verriegelungsmittel. Als Alternative erweist sich eine magnetische Fixierung des Ballspielgerätes an der Ladestation, vorausgesetzt das Ballspielgerät umfasst etwaige magnetisierbare Komponenten. Die Ladestation kann hierzu einen Permanentmagneten oder alternativ elektromagnetische Bauteile umfassen, die in diesem Fall gezielt aktivierbar sein können.

In einer besonders bevorzugten Ausgestaltung der Erfindung dient das Aufnahmemittel nicht nur zur Aufnahme und Fixierung des Ballspielgerätes, sondern soll dieses zugleich in eine optimale Position in der Ladestation ausrichten, um eine besonders energieeffiziente Energieübertragung gewährleisten zu können. Die Effizienz des Ladeprozesses bei induktiver Ladung hängt maßgeblich von der Lage und Orientierung der Induktionsspulen beider Ladepartner ab. Daher ist es wünschenswert, diese in eine möglichst optimale, zueinander gewandte Ausrichtung zu verbringen, um eine optimale Energietransmission von der Ladestation zum Ballspielgerät zu erreichen. Zu diesem Zweck weist wenigstens ein Aufnahmemittel etwaige Ausrichtemittel auf, um das Ballspielgerät in die optimale Lage zu versetzen. Als Ausrichtemittel können bei mechanischer Fixierung etwaige korrespondierende Elemente an Ballspielgerät und Aufnahmemittel sein, die ausschließlich eine optimale Position des Golfballs in dem Aufnahmemittel zulassen. Bei magnetischer Fixierung kann dieser Prozess durch eine entsprechende Elektronik mit geeigneter Steuerung bzw. Regelung realisiert sein. Denkbar ist jedoch auch eine manuelle Ausrichtung, wobei dem Spieler durch entsprechende Markierungen am Ball und/oder am Aufnahmemittel der Ladestation die optimale Position angezeigt wird.

Die Ladestation kann zudem die Form eines Dongles oder einer Hülle für Mobiltelefone oder Tablets haben, sodass sie einen besonders hohen Komfort und gute Benutzerfreundlichkeit hinsichtlich der mobilen Nutzung ermöglicht. In der Grundfunktion ermöglicht sie es dem Nutzer, das Mobiltelefon über ein Kabel an die Ladestation anzuschließen, um die Energiequelle der Ladestation zum Aufladen des Mobiltelefons zu verwenden (tragbarer Akku). Die beschriebene Funktion des Gateways ermöglicht die Ladestation dabei ebenfalls, indem die Kommunikation zwischen Ballspielgerät und Smartphone sowohl über eine kabellose Datenverbindung, als auch eine kabelgebundene Datenverbindung ermöglicht wird. Die Aufnahme eines oder mehrere Ballspielgeräte kann auf verschiedene Arten gemäß der bereits beschriebenen Aufnahmemittel erfolgen. Bei einer Hülle für Mobiltelefone oder Tablets bspw. über eine oder mehrere Mulden auf der Oberfläche, in der/denen der/die Ball/Bälle mechanisch oder magnetisch fixiert werden kann/können und beim Dongle bspw. in Form eines Einschubs.

Wurde die Kabelverbindung zwischen Ladestation und Mobiltelefon/Tablet hergestellt, wird diese vorzugsweise zum Datenaustausch zwischen den Kommunikationspartnern verwendet, um im Idealfall möglichst wenig Energie für den drahtlosen Datenaustausch zwischen Ladestation und Mobiltelefon/Tablet aufzuwenden.

Gemäß einer weiteren bevorzugten Ausführungsform der Erfindung umfasst die Ladestation eine Ladelogik. Eine derartige Ladelogik sieht zum einen entsprechende Mittel vor, um ein in ein Aufnahmemittel eingelegtes Ballspielgerät zu erkennen. Erst nach erfolgreicher Detektion eines eingelegten Ballspielgerätes soll dann der Ladeprozess gestartet werden. Die Umsetzung einer derartigen Logik kann durch geeignete Sensoren bzw. mechanische Schalter erreicht werden, die den eingelegten Ball erfassen.

Alternativ kann als Sensorik auch auf die Induktionsspulen der Ladestation zurückgegriffen werden. Die Ladelogik ist bevorzugt geeignet, Signale über die Induktionsspulen abzustrahlen und/oder zu empfangen. Bspw. könnte die Ladelogik Mittel umfassen, um regelmäßig Informationen, so zum Beispiel einen Ping, über die ein oder mehreren Induktionsspulen der Ladestation auszusenden und an ein möglicherweise aufgenommenes Ballspielgerät zu übertragen. Anhand einer möglichen Rückantwort, die von der Ladelogik über die Induktionsspule der Mobilstation und/oder über das erste Kommunikationsmodul der Ladestation empfangbar ist, kann ein aufgenommenes Ballspielgerät erfassbar sein. Auf diesem Weg lassen sich zudem weitere Informationen zwischen Ballspielgerät und Ladestation austauschen, wie beispielsweise Informationen zur Identifizierung des Ballspielgerätes, Informationen über den Ladezustand des Ballspielgerätes, etc..

Neben der Übertragung von Informationen bezüglich des Ladezustands aufgenommener Ballspielgeräte kann die Ladestation den aktuellen Ladezustand eines aufgenommenen Ballspielgerätes alternativ oder zusätzlich messen. In diesem Zusammenhang ist es vorteilhaft, wenn der Ladezustand des jeweiligen Ballspielgerätes dem Nutzer visuell und/oder akustisch an der Ladestation signalisiert wird. Gegebenenfalls könnte die Ladestation dem Nutzer auch eine Empfehlung für ein aufgenommenes Ballspielgerät unterbreiten, welches aufgrund seines Ladezustandes nachfolgend für die Sportaktivität verwendet werden sollte. Das Aussprechung einer Empfehlung für ein Ballspielgerät in Abhängigkeit dessen Ladezustands kann in Zusammenarbeit mit einer auf dem Nutzerendgerät ausgeführten Applikation erfolgen, die notwendige Daten bezüglich des Ladezustands eingelegter Ballspielgeräte von der Ladestation erhält und darauf basierend eine Empfehlung an den Nutzer abgibt.

Ergänzend kann die Ladestation mit ein oder mehreren Schnittstellen für externe Geräte ausgestattet sein, so zum Beispiel mit ein oder mehreren USB-Ports und optional mit Thunderbolt, FireWire oder mit sonstigen parallelen oder seriellen Schnittstellen. Diese Schnittstellen können einerseits zur bidirektionalen Informationsübertragung zwischen Ladestation und externem Gerät dienen, alternativ jedoch auch zur Energieversorgung ein oder mehrerer externer Geräte aus der Energiequelle der Ladestation oder zum Aufladen der Energiequelle der Ladestation geeignet sein. Beispielsweise lässt sich das Smartphone des Golfspielers über einen USB-Port über die Ladestation aufladen.

Für diesen Fall kann in der Ladelogik eine weitere ergänzende Sicherheitsfunktion implementiert sein. Die Ladelogik überwacht den Ladezustand der internen Energiequelle der Ladestation. Bei Unterschreiten eines definierbaren Mindestladezustandes kann die Energieversorgung aus der internen Energiequelle reglementiert werden, insbesondere wird beispielsweise die Ladefunktion externer Geräte über die Schnittstelle deaktiviert, um die verfügbare Restenergie ausschließlich oder im Wesentlichen für den Ladeprozess aufgenommener Ballspielgeräte und den Weiterbetrieb der Ladestation als Datenspeicher und Kommunikationsvermittler zwischen Golfball und Smartphone bis zum Spielende zu nutzen.

Der Mindestladezustand lässt sich beispielsweise in Abhängigkeit des Spielplans des Golfspielers definieren. Beispielsweise kann dieser eingeben, welche Golfbahnen bzw. wie viele Löcher noch zu spielen sind, sodass darauf und basierend auf seiner Spielstärke (Anzahl zu erwartende Schläge, ...) die Berechnung des erforderlichen Restladezustandes erfolgt. Die Berechnung kann ebenfalls in Zusammenarbeit mit einer auf dem Nutzerendgerät installierten Applikation erfolgen.

Optional kann die Ladestation zudem mit einem internen Ortungsmodul, beispielsweise mit einem GPS-Modul, ausgestattet sein. Alternativ kann die Ladestation über wenigstens ein Kommunikationsmodul mit einem externen Ortungsmodul verbindbar sein und Ortungsdaten von dem externen Ortungsmodul abrufen. Diese Ortungsdaten, entweder die des internen GPS-Moduls oder aber eines externen Ortungsmoduls lassen sich über das erste Kommunikationsmodul an wenigstens ein Ballspielgerät übertragen, um die Ortung innerhalb des Ballspielgerätes zu optimieren, Stichwort "Assisted GPS".

Die Ladestation kann zudem mit wenigstens einem Speichermittel ausgestattet sein, um die über ein oder mehrere Kommunikationsmodule eingehenden Daten zwischen zu speichern bzw. für den nachfolgenden Abruf bereitstellen zu können, auch über Schnittstellen für externe Speichermedien, die temporär eingelegt oder angeschlossen werden. Auch könnten innerhalb des internen Speichermittels Identifikationsdaten der Ladestation bzw. dem Nutzer zugewiesener Ballspielgeräte hinterlegt sein. Dadurch kann die Ladestation aufgenommene Ballspielgeräte des eigenen Spielers bzw. fremder Spieler erkennen und unterscheiden. Dies ist vor allem für die Datenweiterleitung an das Nutzerendgerät von Bedeutung, kann jedoch auch bei der vorhergehenden Reglementierung der intern gespeicherten Restenergie eine Rolle spielen, da eventuell Ballspielgeräte des eigenen Nutzer bevorzugt behandelt werden sollten.

Die Ladestation kann zusätzlich mit wenigstens einem Mikrophon zur Aufzeichnung etwaiger Spielgeräusche ausgestattet sein. Denkbar ist beispielsweise die Aufzeichnung etwaiger Spielgeräusche des wenigstens einen Ballsportgerätes, beispielsweise die Aufzeichnung des Klangs im Treffmoment des Ballspielgerätes bzw. des Golfballes. Diese zusätzliche Information kann zusammen mit den Ortungsdaten bzw. allen weiteren empfangenen Daten des Ballspielgerätes gespeichert bzw. über das zweite Kommunikationsmodul einem externen Gerät zur Verfügung gestellt werden.

Denkbar ist es auch, dass die Ladestation zum Aufbau eines vermaschten Netzwerkes mit weiteren Ladestationen bzw. anderen Kommunikations- und Routingpartnern geeignet ist. Hierzu umfasst die Ladestation einen entsprechenden Netzwerkprozessor mit Routinglogik zum Aufbau eines Adhoc-Netzes bzw. vermaschten Netzwerkes. Derartige Netze zeichnen sich durch ihre Stabilität aus, eine Infrastruktur wird nicht benötigt. Das vermaschte Netzwerk dient beispielsweise zur Überbrücken schwieriger Übertragungsverhältnisse bzw. größerer Funkstrecken, da Informationen über ein oder mehrere Netzknoten an die anvisierte Zielladestation weitergeleitet werden können.

Neben der mobilen Ladestation betrifft die vorliegende Erfindung ein System zur Ortung eines Ballspielgerätes, insbesondere eines Golfballes. Das System umfasst wenigstens ein Ballspielgerät mit einer integrierten Elektronik zur Ortung des Ballspielgerätes. Neben dem Ortungsmittel des Ballspielgerätes können optional etwaige Sensoren zur Aufzeichnung der Bewegungen des Ballspielgerätes vorgesehen sein. Zudem umfasst das System wenigstens ein mobiles Gateway für die Kommunikation des wenigstens einen Ballspielgerätes mit wenigstens einem Nutzergerät.

Das mobile Gateway kann vorzugsweise gemäß der erfindungsgemäßem mobilen Ladestation bzw. einer vorteilhaften Ausgestaltung der mobilen Ladestation ausgeführt sein. Für das System ergeben sich somit dieselben Vorteile und Eigenschaften, wie Sie bereits anhand der mobilen Ladestation erläutert wurden. Auf eine wiederholende Beschreibung wird aus diesem Grund verzichtet.

Das Ballspielgerät kann eine Ballgröße von mindestens 40mm und maximal 50mm, idealerweise von mindestens 42,68mm haben. Das Gewicht des Ballspielgerätes beträgt bevorzugt maximal 50g, besonders bevorzugt maximal 45,93g. Durch diese physikalischen Vorgaben werden extreme Voraussetzungen an die Hardwareintegration gestellt. Das Ballspielgerät betrifft insbesondere einen Golfball. Die nachfolgenden Ausführungen lassen sich jedoch ohne weiteres auf sämtliche Ballspielgeräte, wie Fußbälle, Tennisbälle, Handbälle, Basketbälle, Footballs, Cricket, etc. anwenden. Das Ballspielgerät umfasst wenigstens ein integriertes Ortungsmodul, insbesondere einen GPS-Empfänger, zur Ortungsbestimmung des Ballspielgerätes.

Daneben ist ein Kommunikationsmodul zum bidirektionalen Datenaustausch mit einer Basisstation enthalten. Insbesondere kann das Ballspielgerät über ein mobiles Gateway mit einem Nutzerendgerät, wie Smartphone, Laptop, Tablet, Wearable, etc. kommunizieren. Die Basisstation bzw. das mobile Gateway ist eine mobile Ladestation gemäß der vorliegenden Erfindung. Das Kommunikationsmodul des Ballspielgerätes sendet bevorzugt mittels Kurzstreckenfunk, vorzugsweise im ISM-Band. Grundsätzlich denkbar ist auch eine Variante, bei der das Ballspielgerät über Kurzstreckenfunk direkt mit dem mobilen Nutzerendgerät, insbesondere Mobiltelefon, kommuniziert, sofern dieses einen geeigneten Funktransceiver beinhaltet.

Die benötigten Elektronikkomponenten des Golfballes bzw. des Ballsportgerätes können in Kunstharz, als auch in eine elastische, flexible Dämfungsmasse eingegossen sein, oder mit einer elastischen Aufhängung im Ballsportgerät fixiert sein. Als geeignet erweist sich ein Aufbau mit ein oder mehreren härteren inneren Kernen und vorzugsweise mit wenigstens einem weicheren äußeren Kern, um die vorgeschriebene Elastizität des Golfballes sicherzustellen.

Die integrierte Elektronik kann auf mehreren kleineren Multilayer-Platinen untergebracht sein, diese vorzugsweise übereinander geschichtet und dadurch gestapelt zentral im Kern des Golfballs geschützt untergebracht sind.

Vom Kern des Ballspielgerätes nach außen erweist sich folgender Aufbau als vorteilhaft. An zentraler Stelle im Mittelpunkt des Ballspielgerätes sitzt die gesamte bzw. zumindest große Teil der benötigten Elektronik, d.h. das GPS-Modul, ein Mikroprozessor, wenigstens ein Kommunikationsmodul, etc.. Die Elektronik ist vorzugsweise durch ein oder mehrerer Akku-Schalen oder durch an die Form des Elektronikkerns angepasste Akkus umhüllt. Die Akku-Schalen bzw. an die Form des Kerns angepassten Akkus können sich in einen Akku-Teil oberhalb des Elektronikkerns und einen Akku-Teil unterhalb des Elektronikkerns unterteilen.

Eine Hülle kann den Akku umgeben. Diese Hülle trägt vorzugsweise ein oder mehrere Antennenelemente, die sinnvoller Weise auf der äußeren Oberfläche der Hülle angebracht sind. Denkbar ist eine Ausgestaltung mit zwei Halbschalen, die sich zu der die Akkus umgebenden Hülle zusammensetzen. Beispielsweise kann jede Halbschale ein Antennenelement tragen. Die Ausgestaltung mit mehreren Antennenelementen gewährleistet eine nahezu lageunabhängige Signalabstrahlung bzw. Empfangsqualität, da durch geschickte Platzierung der Antennenelemente stets ein Teil der Antennenstruktur oben liegt bzw. das Antennensignal ohne Hindernis abgestrahlt odeer empfangen werden kann. Denkbar ist ebenfalls der Aufbau der Antenne in Form eines Ringes, bestehend aus Flexleitern (bspw. aus Polyamid) aus dem die Antenne geformt wird.

Um die Außenhülle mit der Antenne kann eine weitere Schale aus Hartgummi, Kunstharz oder Kunststoff vorgesehen sein, vorzugsweise ist sowohl eine Hartgummischale als auch eine äußere Kunststoffschale mit dem an sich bekannten Golfballdesign vorgesehen.

Besonders bevorzugt ist es, wenn das GPS-Modul sowie das Kommunikationsmodul für die drahtlose Übertragung mit einer Basisstation/Gateway/Ladestation ein und dieselbe Antennenstruktur nutzen. Denkbar ist beispielsweise, dass das Kommunikationsmodul im ISM-Bandbereich arbeitet, sodass sich aufgrund des Frequenzverhältnisses von ca. 2:1 bzw. 1:2 zwischen dem genutzten Frequenzband der GPS-Kommunikation (bspw. 1,8 GHz) und dem ISM-Band (bspw. 868 MHz) besonders vorteilhafte Eigenschaft für die Strukturierung der Antennenstruktur ergeben.

Für die drahtlose Energieübertragung zur Aufladung des internen Akkus werden separate Antennen, insbesondere Induktionsspulen verwendet. Denkbar ist es, dass sich diese Antennenstruktur in mehrere Antennen unterteilt, beispielsweise auf einer Antennenstruktur auf der oberen und einer Antennenstruktur auf der unteren Halbkugel, um ein gewisse lageunabhängige Flexibilität bei der Aufnahme des Ballspielgerätes in einer Ladestation zu wahren.

Insbesondere bei Golfbällen treten extrem hohe Kräfte auf, die auf das Ballspielgerät einwirken. Die integrierte Elektronik sowie der verbaute Akku müssen den auftretenden Krafteinwirkungen standhalten können. Als besonders vorteilhaft erweist sich der Einsatz eines Akkus des Typs FLCB (FPC Lithium Ceramic Battery), der ein Lithium-Keramik Feststoffelektrolyt enthält, wobei grundsätzlich auch Lithium-Air Akkus denkbar sind. Derartige Akkus zeichnen sich durch eine sehr hohe mechanische Widerstandsfähigkeit (Stöße, Vibrationen, ...) und hohe Formbarkeit aus, so dass sie beispielsweise können gerollt und geknickt werden können, ohne in Brand zu geraten oder auszulaufen. Sie weisen ein geringes Gewicht bzw. eine gute Energiedichte auf und können in dünnen Schichten gestapelt werden. Durch diese Eigenschaften sind diese besonders gut für den Einsatz in einem Ballspielgerät geeignet. Sie benötigen keine Kühl- oder Schutzvorrichtungen und können so auch selber als Schutzvorrichtung für empfindliche Gegenstände dienen.

Der Akku wird vom Formfaktor ideal an die Form des Balls angelehnt, beispielsweise halbrund. Dies kann beispielsweise dadurch geschehen, dass der Akku aus einzelnen Schichten geschichtet ist, wobei die einzelnen Schichten des Akkus vorzugsweise in der entsprechenden Form hergestellt, gestapelt und laminiert sind. Die einzelnen Schichten zur Formung des Stapels können auch unterschiedlich geformt sein, um eine pyramidenähnliche Akku-Stapelung zur Anlehnung an eine Halbschale zu erzielen.

Gemäß einer alternativen Ausführungsvariante besteht eine Möglichkeit darin, die einzelnen Schichten des Akkus in gleichgroßen Teilen einzuschneiden, wie beispielsweise eine Torte und so zu formen, dass sie sich einer gewünschte Objektform anschmiegen.

Neben dem GPS-Empfänger sowie dem Funkmodul kann das Ballspielgerät zusätzlich mit weiteren Sensoren ausgestattet sein, wie bspw. einem Beschleunigungs- und/oder Bewegungssensor, einem Gyroskop bzw. Drehzahlmesser und/oder einem Lichtsensor und/oder Temperatur- bzw. Feuchtigkeitssensor. Weiterhin kann das Ballspielgerät etwaige Ausgabemittel zur akustischen, visuellen oder haptischen Signalisierung etwaiger Statusnachrichten umfassen. Denkbar ist beispielsweise die Integration wenigstens eines Lautsprechers, um ein Tonsignal hörbar abzugeben. Das ausgegebenen Tonsignal kann den Spieler akustisch auf die Lageposition des Ballspielgerätes hinweisen. Denkbar ist ebenfalls die Ausstattung mit ein oder mehreren Leuchtmitteln, bspw. LEDs, um eine optische Signalisierung zu ermöglichen. Dadurch lässt sich eine aktive Leuchtfähigkeit des Ballspielgerätes realisieren, was dessen Wiederauffindbarkeit bei schwierigen Lichtverhältnissen verbessert. Vorstellbar ist eine kontinuierliche, periodische oder gar blitzlichtartige Beleuchtung. Im Zusammenspiel mit einem Lichtsensor kann in Abhängigkeit der Umgebungslichtverhältnisse automatisch die Leuchtfunktion bestimmt und aktiviert werden. Der Lichtsensor lässt sich auch zu Kommunikationszwecken mit der Basisstation/Gateway/Ladestation einsetzen. Die ein oder mehreren Leuchtmittel können ebenso zur visuellen Darstellung des Status eingesetzt werden. Beispielsweise könnte durch unterschiedliche Farbgebung der Akkuladezustand darstellbar sein. Genauso gut ließe sich der Status der Kommunikationsverbindung mit einer Basisstation/Gateway/Ladestation bzw. der GPS-Status wiedergeben.

Ferner ist es vorstellbar, dass wenigstens ein Vibrationselement innerhalb des Ballspielgerätes integriert ist, um haptische Signalisierung zu ermöglichen.

Auch der Einbau eines GSM-Moduls, einer SIM-Karte bzw. einer E-SIM-Karte in das Ballspielgerät ist vorstellbar.

Für die Fixierung bzw. Ausrichtung des Ballspielgerätes in einer mobilen Ladestation gemäß der vorliegenden Erfindung umfasst das Ballspielgerät zusätzlich Fixierungs- und Ausrichtungselemente, beispielsweise ein separates Element aus Stahl bzw. einem Magneten oder einem ähnlichen Material, das im Ballspielgerät enthalten ist und mit einem Fixierungs- und Ausrichtungselement der Ladestation korrespondiert.

Denkbar ist es auch, dass das Ballspielgerät zum Aufbau eines vermaschten Netzwerkes mit weiteren Ballspielgeräten, Ladestationen gemäß der vorliegenden Erfindung bzw. anderen Kommunikations- und Routingpartnern geeignet ist. Hierzu umfasst das Ballspielgerät einen entsprechenden Netzwerkprozessor mit Routinglogik zum Aufbau eines Adhoc-Netzes bzw. vermaschten Netzwerkes. Derartige Netze zeichnen sich durch ihre Stabilität aus, eine Infrastruktur wird nicht benötigt. Das vermaschte Netzwerk dient beispielsweise zur Überbrücken schwieriger Übertragungsverhältnisse bzw. größerer Funkstrecken, da Informationen über ein oder mehrere Netzknoten vom Sender an den gewünschten Empfänger der Nachricht weitergeleitet werden können.

Ein weiterer Aspekt betrifft zudem eine softwarebasierte Applikation, auch als App bezeichnet, die auf einem Nutzerendgerät (Smartphone, Tablet, PC, Server, Wearable, etc.) lauffähig ist und zur Datenauswertung und Darstellung der aufgezeichneten Daten eines Ballspielgerätes, insbesondere Golfballs, geeignet ist.

Weitere Vorteile und Einzelheiten der Erfindung sollen im Folgenden anhand diverser Figurendarstellungen erläutert werden. Es zeigen:
- Figur 1:: eine exemplarische Darstellung eines geöffneten Golfballs gemäß dem erfindungsgemäßen System,
- Figur 2:: eine exemplarische Darstellung des Akku-Aufbaus eines Golfballs,
- Figur 3:: eine Seitenansicht der erfindungsgemäßen mobilen Ladestation und
- Figur 4:: eine Draufsicht auf die Ladestation der Figur 3.

Die Erfindung soll im Folgenden anhand des Gesamtsystems zur Ortung eines Golfballes im Detail dargestellt werden. Das System bietet dadurch eine Technologie-Plattform, die in bestehende Fertigungsprozesse, beispielsweise Golfbälle integriert werden kann. Es bieten sich aber auch alle anderen (Schlag-) Sportarten mit Ballsportgeräten an. Die Plattform kommuniziert kabellos mit einer Smartphone-App und ermöglicht die Erfassung und Darstellung von Informationen, wie zum Beispiel die Ausgangsposition des Balls, Position des Golfballs nach Schlag inkl. visueller und akustischer Ortungsmöglichkeit, Flug- und Rollweg des geschlagenen Balls, , Trefferwinkel, Treffergeschwindigkeit, Bewegungskurve des SpielersScore-Karten Funktionen, Statistiken und Analysen zur Verbesserung der persönlichen Spielfähigkeiten.

Kurz zusammengefasst kann die Position des Golfballes lokalisiert werden, indem der Golfball seine aktuelle Position über ein in ihm enthaltenes GPS-Modul ermittelt und über eine Funkstrecke, unter Idealbedingungen von bis zu 5km, an eine Basisstation, im Folgenden auch als "Blackbox" bezeichnet, übermittelt. Die Blackbox kann die Daten zwischenspeichern und über eine mit einem Nutzerendgerät, wie z. Bsp. Smartphones, Smartwatches, Fitnessuhren und -armbändern, Datenbrillen, VR-Brillen, Wearables, Smart Clothing und weiteren mobilen, sowie stationären (EDV-) Geräten, kompatible Funkverbindung, bspw. Bluetooth weiterleiten, sodass diese Geräte in der Lage sind, die Daten zu empfangen, zu speichern, zu verarbeiten, darzustellen und auszuwerten.

Das Gesamtsystem aus Golfball, Blackbox und Nutzerendgerät erhöht in erster Linie die Spielfreude des Nutzers, indem das Frustrationspotential gesenkt wird. Dies geschieht einerseits dadurch, dass der Golfball über eine App für Smartphones, Smartwatches oder andere Wearables und Smart Clothing auch über große Distanzen einfach und genau (< 1m) lokalisiert werden kann. Unmittelbar nach dem Abschlag und dem Ausrollen des Balls übermittelt er die über GPS ermittelte Position visuell an den Golfer. Dieser weiß also noch am Abschlag wo sein Ball liegt, ob er sich gegebenenfalls außerhalb des Spielfelds befindet, ob er einen zweiten, provisorischen Ball schlagen sollte, wie er ohne Suchen zügig zu seinem Ball gelangt und welchen Schläger er für den nächsten Schlag mitnehmen sollte. Auf diese Weise wird auch die Spielgeschwindigkeit gesteigert, Wartezeiten für alle Spieler auf ein Minimum reduziert und Golfclubs sowie Golfplatzbetreiber können einen höheren Durchsatz und somit gesteigerte Umsätze verbuchen. Losgelöst davon geht der Ball nur noch in Ausnahmefällen, beispielsweise wenn er in einem gesperrten Bereich des Golfplatzes wie einem Biotop liegt, verloren. Selbst bei höheren Erstbeschaffungskosten wird sich eine schnelle Amortisation einstellen. Im Durchschnitt verliert ein Singlehandicapper pro Jahr 32,5 Bälle, Anfänger und Fortgeschrittene bis zu dreimal so viele. Für Golfplatzbetreiber kann auch eine Möglichkeit vorgesehen werden, die Inhaber verlorener Bälle ausfindig machen zu können. So können die bspw. vom Platzpfleger gefundenen Bälle den Inhabern, ggfs. gegen Zahlung einer kleinen Gebühr, zurückgegeben werden.

Durch weitere angebundene Dienste und Services wird der Fokus noch weiter auf das Spiel gerichtet und die Spielfreude weiter gesteigert. Die elektronische Score-Karte zählt automatisch die benötigten Schläge und zahlreiche Auswertungen der Spieldaten und Statistiken ermöglichen es dem Spieler seine Stärken und Schwächen auszumachen, gezielt zu trainieren und sich mit anderen Spielern zu vergleichen und zu messen.

Neben den über den Golfball, die Blackbox und das Smartphone ermittelten Daten soll auch weiteres Zubehör, bspw. am Schläger oder Golfhandschuh befestigte Hardware, Daten ermitteln und für die Statistik und Auswertung zur Verfügung stellen, bspw.:
- Schläger-, Spieler-, Arm- und Hand-Bewegung beim Ausholen und beim Abschlagen/Abschwung
- Schläger(kopf)-Geschwindigkeit beim Ausholen und beim Abschlagen/Abschwung, sowie im Treffmoment
- Timing von Ausholen und Abschlägen/Abschwung
- Abschlagswinkel Schläger, Schlägerkopf und Ball im Treffmoment
- Schlägerebene
- Handebene
- Handgeschwindigkeit beim Ausholen und Abschlagen
- Hüftdrehung bei Rückschwung und Abschwung

Die erfassten Daten werden in einer relationalen Datenbank zur Verfügung gestellt. Ermöglicht werden dadurch sowohl Auswertungen, auch in graphischer Form, die der Nutzer vorgefertigt über Templates erhält, als auch individuell maßgeschneiderte Auswertungen, basierend auf besonderen Daten- und Auswertungsmodellen, die der Nutzer selber definieren und nach persönlichem Bedarf zusammenstellen kann. Auf Basis seiner Statistiken werden Tipps von Profis automatisiert und zum passenden Zeitpunkt eingespielt, um den Spieler gezielt zu beraten und Übungen zur Verbesserung zu empfehlen und zu erklären. Möglich ist auch ein Service, an den der Nutzer seine Daten als Datensatz in Textform oder Videoaufzeichnung übermitteln kann und der von Golf-Pros ausgewertet wird, so dass im Gegenzug personalisierte Trainingsanweisungen, auch in Form von Videos, Videotelefonie oder Videoteaching umgesetzt werden können. Des Weiteren ist denkbar, dass der Golfspieler, basierend auf der Eingabe seines Spiegerätes, z.B. seines Golfschlägers, basierend auf einer speziellen Data Analytics Software in Kombination mit den Daten des Sportgerätes, z.B. dem Golfball, Vorschläge für die richtige Auswahl seines Sportgerätes, z.B. seines optimalen Göolfschägers erhält. Bei der Data Analytics können den vorher genannten Daten z.B. auch Temperatur, Luftdruck, Luftfeuchtigkeit, Windgeschwindigkeit mit einbezogen werden.

Im Folgenden sollen die Einzelkomponenten des System diskutiert werden. Begonnen wird mit dem Hardwareaufbau des Golfballs, der aus einer Außenhülle und einem ein- oder mehrteiligen Kunststoffkernen besteht, wobei der innenliegende Kern aus einem schlag-, druck und vorzugsweise hitzeresistenten Material besteht, in welches die in im beinhalteten elektronischen Komponenten eingelassen sind. Das Material und die Komposition der Komponenten ist so gewählt, dass das Objekt gegen die massiven auf den Ball einwirkenden Kräfte resistent ist. Gleichzeitig ermöglicht es sämtliche gewünschte Eigenschaften wie z.Bsp. Ortungsgenauigkeit, Wiederaufladbarkeit, >300m Kommunikationsstrecke, Antennendesign.

Der fertige Golfball, als auch das in ihm enthaltene Objekt erfüllen die dem Golfsport zugrundeliegende Regularien, wie z. Bsp. Mindestdurchmesser, Maximalgewicht, eindeutige ID/visuelle Markierung zur Wiedererkennung. Wird das Objekt in einen Ball integriert, hat es keinen negativen Einfluss auf die Flug- und Rolleigenschaften des Balls. Das Objekt kann nicht nur in Golfbälle integriert werden. Es eignet sich ebenfalls für zahlreiche weitere (Schlag-) Sportarten und zur Integration in andere Sportgeräte.

Das Objekt ist durch die in ihm enthaltenen Sensoren in der Lage, zahlreiche Daten, vornehmlich Nachverfolgungsdaten (ggf. Lokations- und Bewegungsdaten), zu erfassen und zu übermitteln. Im Mittelpunkt steht dabei nicht nur das Aufzeichnen des eigenen Spiels, die automatische Erstellung von umfangreichen Spielstatistiken inklusive Vergleichsmöglichkeiten mit anderen Spielern und das einfache Finden des Golfballs, sondern vielmehr die gezielte, vielschichtige Auswertung der Spieldaten, um Stärken und Schwächen des Spielers auszumachen und gezielt zu trainieren, sowie auf rückblickender Statistik und gegenwärtigen Gegebenheiten beruhende Ratgeber, bspw. zur Auswahl des richtigen Schlägers für den kommenden Schlag, aufgrund der zu erwartenden Schlagweite und der Distanz zum (Zwischen-) Ziel.

Um die elektronischen Bauteile zu schützen, ist der Aufbau des Kerns besonders gestaltet. Die Komponenten werden in Kunstharz eingegossen, dabei gibt es einen (oder mehrere) härtere/n innere/n Kern/e und einen oder mehrere weiche/n äußere/n Kern/e. Die spezielle Herausforderung besteht darin einen widerstandsfähigen Kern zu entwickeln, der die eingelassenen Komponenten einerseits ausreichend schützt und andererseits eine ausgewogene Elastizität des Golfballs ermöglicht, sodass der Ball noch angenehm gespielt werden kann. Dies wird durch eine oder mehrere um den Kern herum angebrachte Schichten/Kerne erreicht. Abgeschlossen wird der Golfball durch die typische Außenhülle aus Kunststoff.

Den einwirkenden Kräften wird ferner entgegengewirkt, indem mehrere kleine Multilayer-Platinen übereinander geschichtet werden. Der Durchmesser des Kerns ist dadurch so klein wie eben möglich, wirkt sich positiv auf die Dämpfung der einwirkenden Kräfte aus. Der Aufbau bietet auch bessere Ergebnisse hinsichtlich der Schirmung von RF Störungen.

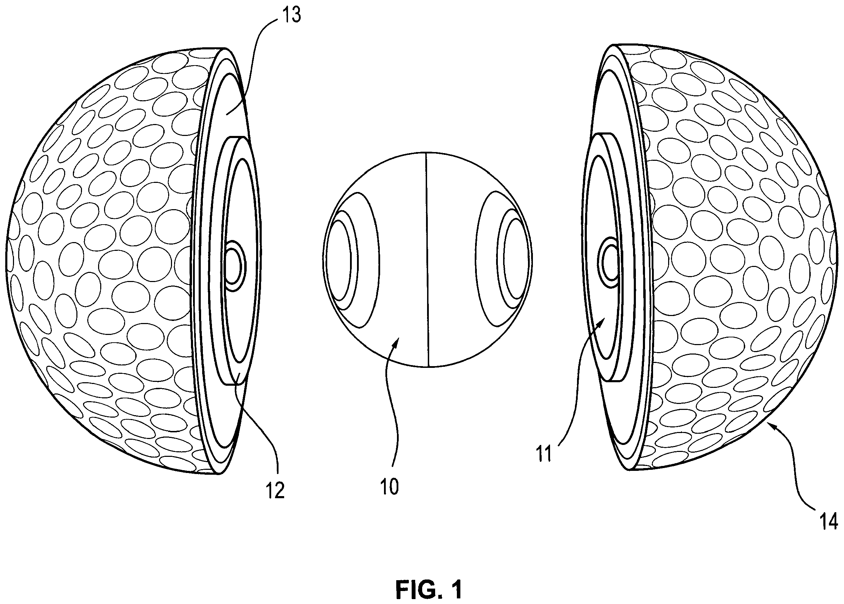

Zusätzlich muss die Sende-/Empfangsleistung der eingelassenen elektronischen Komponenten ausreichend gewährleistet sein. Denkbar ist auch eine zusätzliche Stützstruktur "Gerüst" aus Glasfaser oder einem leichten, festen Metall wie Titan. Um eine gute Signalübertragung einerseits und eine gute Spielbarkeit des Golfballs andererseits zu ermöglichen sind die Komponenten im Ball speziell angeordnet. Figur 1 zeigt eine beispielhafte Darstellung des Golfballaufbaus, der zur besseren Darstellung in zwei Hälften aufgeschnitten wurde.

Von Innen nach Außen besteht der Golfball aus dem elektronischen Objekt bzw. dem Elektronikkern 10. Um den Kern legen sich Akku-Schalen 11 oder an die Form des Kerns 10 angepasste Akkus an, die wiederum von einer Antennen-Außenhülle 12 umgeben sind. Geschützt wird die Außenhülle 12 durch ein oder mehrere Schalen 13 aus vorzugsweise aus Hartgummi, Kunstharz und/oder Kunststoff. Die Golfballaußenhaut wird durch die konventionelle Kunststoffschale 14 gebildet.

Alle Komponenten des Elektronikkerns 10 sowie die Akku-Schalen 11 und die Antennenstruktur der Außenhülle 12 werden anhand ihres Gewichts arrangiert um eine gute Gewichtsverteilung zu erhalten. Das Modell des Gewichtsausgleichs kann vorsehen, dass die Akkus 11 oben und unten im Kern angebracht werden, dazwischen befindet sich ein Gerüst aus E-Technik-Komponenten 10 und außen herum eine Hülle 12 auf der die Antennen angebracht sind.

Der Elektronikkern umfasst weiterhin einen Mikrokontroller mit der darauf ausgeführten Firmware zur Steuerung der Datenaufzeichnung und sonstigen Funktionen (Datenübertragung) des Golfballes. Weiterhin ist ein interner Speicher zur Datenablage bzw. Zwischenspeicherung vorgesehen. Weitere Komponenten der Elektronik sind ein Laderegler für den Akku 11, eine Ladelogik, Induktionsspulen für die drahtlose Energieübertragung (Empfänger) zum Aufladen des Akkus 11, ein Spannungsregler, ein RF Empfänger/Sender (Funkmodul) für die Datenkommunikation mit der Blackbox, eine RF Antenne und GPS Antenne, ein GPS Empfänger. Der GPS Empfänger kann gleichzeitig ein Beschleunigungssensor und/oder Gyroskop beinhalten, diese können jedoch auch als separater oder separate Sensoren in die Elektronik integriert sein. Das Gyroskop dient zur Berechnung der Flugbahn und des Spins und kann im Accelerometer (6-Achsen-Accelerometer) enthalten sein.

Die Zusammensetzung des Kerns sieht zudem vor, dass sich der GPS-Empfänger und der RF-Funktransceiver die Antenne teilen. Dadurch wird der geringe Platz im Kernbestmöglich ausgenutzt und Störsignale bzw. Abhängigkeiten von mehreren Antennen soweit wie möglich reduziert. Möglich wird die kooperative Nutzung einer Antenne, da GPS und Funk aufgrund der elektronischen Steuerung niemals parallel aktiv werden und somit immer nur ein Bauteil eine Antenne zur selben Zeit verwendet. GPS läuft auf einer Frequenz um die 1,8 GHz, RF vorzugsweise im 868 MHz-Band (ISM-Band), dadurch ist die kooperative Nutzung einer einzelnen Antenne für diese beiden Funktionen grundsätzlich denkbar. Die gegebenenfalls schwächere Antennenleistung des Golfballs kann durch eine umso bessere Antenne in der Blackbox ausgeglichen werden, da in der Blackbox genügend Platz für die Unterbringung einer leistungsstarken Antenne ist.

Für die drahtlose Energieübertragung zur Ladung des Akkus 12 ist zudem eine separate Antenne vorgesehen. Es ist denkbar, dass der Ball mehrere Antennen desselben Typs enthält, bspw. auf der oberen und unteren Halbkugel angebracht, um unabhängig von der Lage die bestmögliche Sende- und Empfangsqualität für die Kommunikation als auch für den Ladeprozess eine effiziente Energietransmission zu gewährleisten.

Die Antenne wird auf einer Halbkugel 12 aufgebracht und hat somit die Form einer Halbkugel. Dabei kann die Antenne selber eine Halbkugel sein oder Kugel sein, oder ein auf einer Kugel 12 aufgebrachtes Muster (sphärische Platine mit darauf befindlicher Antenne) sein. Ein denkbares Herstellungsverfahren besteht darin, glasfaserverstärkte Halbkugeln z.B. aus Polyester oder Epoxidharz anzufertigen. Diese werden einseitig mit einem leitenden Material (z.B. Palladium-Doping) behandelt und dann elektrolytisch verkupfert. Darauf wird mittels Tampondruck ein ätzresistentes Muster aufgebracht, daraufhin das unnötige Kupfer weggeätzt. Alternativ könnte das Doping bereits mittels Tampondruck erfolgen und die Form direkt in einem Schritt aufgebaut werden. Das fertige Teil könnte dann zum weiteren Schutz erneut mit glasfaserverstärktem Kunstharz überzogen oder direkt eingegossen werden.

Alternativ könnte die Antennenstruktur auf der Halbkugel 12 auch auf einer 5-Achs CNC Fräse ausgefräst oder durch mechanisches Auflaminieren einer Kupferschicht z.B. mittels Tiefziehverfahren, hergestellt werden.

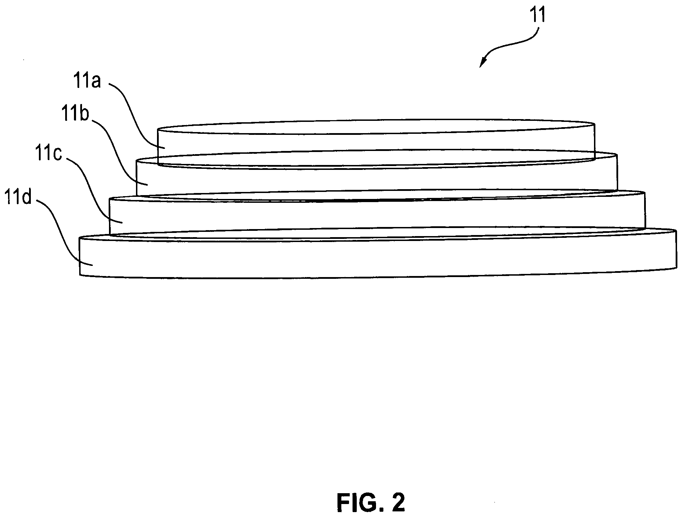

Als Akku 11 ist im Golfball ein Akku des Typs FLCB (FPC Lithium-Ceramic Battery) verbaut, der ein Lithium-Keramik Feststoff-Elektrolyt enthält. Sie zeichnen sich durch eine hohe Widerstandsfähigkeit (schlag-, stich-, schnitt-, vibrations- und hitzeresistent), gute Formbarkeit (können gerollt und geknickt werden), ein geringes Gewicht bzw. eine gute Energiedichte (ca. 1,5g für 45mAh) aus. Der Akku 11 wird vom Formfaktor ideal an die Form des Balls angelehnt (bspw. halbrund). Dies geschieht, indem die einzelnen Schichten des Akkus 12 in der entsprechenden Form hergestellt, gestapelt und laminiert werden. Ein Beispiel eines derart aufgebauten Akkus 11 ist der Figur 2 zu entnehmen, die eine stark vereinfachte Darstellung des denkbaren Akku-Formfaktors zeigt. Zu sehen ist, dass der Akku 11 aus einzelnen gestapelten Schichten 11a, 11b, 11c, 11d besteht, die zusammen die charakteristische Halbkreisform bilden. Der Akku-Stapel 11 besteht folglich aus unterschiedlich geformten "Schichten" 11a, 11b, 11c, 11d.

Optional kann der Golfball einen Lichtsensor für eine optische Kommunikation zwischen Blackbox und Golfball enthalten, sofern die reguläre Datenübertragung per drahtloser Energieübertragung nicht möglich ist.

Die Grundfunktionen des Golfballs stellen sich wie folgt dar. Wie bereits zuvor erwähnt wurde, umfasst das System eine Blackbox, die ebenfalls zur Aufnahme eines Golfballes und zum Aufladen des Akkus 12 geeignet ist. Der Spieler kann den Golfball einfach in die Halterung der Blackbox legen, wodurch dieser durch die Blackbox automatisch gehalten und selbständig ausgerichtet wird, so dass dieser die zwecks Ladung und Kommunikation bestmögliche Lageposition in der Blackbox einnimmt. Dazu umfassen der Golfball und die Blackbox korrespondierende Elemente, durch die eine Ausrichtung des Golfballs zur optimierten Lage- und Kommunikationsposition in der Blackbox ermöglicht wird. Der Prozess funktioniert vollautomatisch, sobald der Nutzer einen Golfball in die Halterung der Blackbox eingelegt, bspw. über Magnetismus oder eine spezielle Mechanik zur Fixierung über die Oberfläche, bspw. durch eine Klemmhalterung.

Das drahtlose Aufladen des Balls bei gleichzeitig hoher Energieeffizienz wird durch eine besondere Anordnung der Empfangsspulen erreicht. Eingesetzt wird Nahfeldübertragung mit (resonant) induktiver Kopplung. Durch interne Leuchtmittel kann der Golfball beleuchtet werden und den aktuellen Ladestatus ausgeben. Sobald der Golfball in die Ladestation eingelegt wird, werden sämtliche Funktionen des Golfballs (Funk etc.) deaktiviert und der Golfball wird automatisch aufgeladen. Während des Ladeprozesses pulsiert der Ladestand, sodass der Ladestatus signalisiert wird, sogar farbig: rot - gelb - grün. Nach vollständiger und erfolgreicher Aufladung erlischt der Ladestand-Indikator.

Die Funktionen des Golfballs, d.h. die Datenaufzeichnung, wird automatisch aktiviert, sobald dieser aus der Halterung entfernt wird. Die Aktivierung erfolgt von der Blackbox über die Ladespulen. Ein An- und Ausschalten des Golfballes per App auf dem Nutzerendgerät ist ebenfalls möglich. Das "Ein- und Ausschalten" des Balles erfolgt ohne haptischen Schalter des Golfballs und aus Energiegründen ohne Nutzung des RF-Empfängers des Golfballs.

Im Detail läuft der Prozess des Ein- und Ausschaltens folgendermaßen ab. Die Blackbox erkennt über einen in der Golfballhalterung angebrachten Sensor/Schalter oder Mechanismus, ob ein Ball eingelegt ist und sendet einen Ping über die Induktionsspule an den Golfball. Alternativ kann die Blackbox im eingeschalteten Zustand alle x Sekunden einen Ping über die Induktionsspule aussenden. Empfängt ein ausgeschalteter Golfball einen Ping, aktiviert er sich und sendet ein Feedback inkl. Info zur Identifizierung, Ladestand, etc. per RF an die Blackbox. Die Blackbox weiß daher unter Anderem, welcher Golfball in welcher Halterung eingelegt ist. Nach dem Aussenden dieser Informationen kann der Golfball sich wieder automatisch deaktivieren. Ein aktivierter gerade eigelegter Golfball sendet demnach nach dem Einlegen in die Ladestation einmalig die genannten Informationen aus und deaktiviert sich dann selbständig.

Der Golfball zeichnet während der Benutzung zahlreiche Daten auf, speichert sie zwischen damit sie zwischen Golfball und Blackbox ausgetauscht werden können. Gegebenenfalls werden einzelne Daten vorab bereits verarbeitet oder aufbereitet. Zu den aufgezeichneten Daten gehören folgende:
- Geokoordinaten vor der Bewegung
- Geokoordinaten nach der Bewegung (wenn > 2 Sekunden nicht bewegt)
- Geokoordinaten während der Bewegung (alle 0,X Sekunden)
- Beschleunigung
- Geschwindigkeit (Vmax, Ballfluggeschwindigkeit, Ballrollgeschwindigkeit)
- Distanz der zurückgelegten Strecke
- Flugweg: Distanz vom Schlag bis zum ersten Bodenkontakt
- Flugbahn / -höhe
- Fluglinie / -rotation / -drall
- Rollweg: Distanz vom ersten Bodenkontakt bis zum Stillstand
- Drall / Rotation beim Rollen
- Ladestand des Akkus im Golfball
- Horizontale Lage am Hang (Hangabwärts, Hangaufwärts) inkl. Winkel
- Berechnung der "netto" Schlagdistanz: Einberechnung von Höhenunterschieden von Ausgangs und Endpunkt und Berechnung der Schlagweite in der Ebene inkl.

Flug- und Rollweg. Berücksichtigung der Werte bspw. bei Vorschlag eines Schlägers für den nächsten Schlag durch Kontext von rückblickenden Statistiken und gegenwärtigen Gegebenheiten wie Gelände, Wetter, ....

Der Golfball übermittelt die Daten nach Aufzeichnung per RF auch über große Distanzen an die Blackbox, welche die Daten empfängt und zwischenspeichert. Dort können sie bspw. vom Smartphone abgerufen werden. Der Golfball ermittelt im angeschalteten Zustand nach jeder Änderung der Lageposition, somit vor dem ersten Abschlag und nach jedem folgenden Schlag seine neue Lageposition und stellt diese Information der Blackbox und dem Smartphone zur Verfügung. Die Darstellung der Position wird über eine Karte des aktuell gespielten Lochs durchgeführt, sodass der Nutzer sofort erkennen kann, so sich der Ball befindet. Neben der Position des Balls wird kontinuierlich die Entfernung zwischen Nutzer und Golfball, sowie die Richtung über einen Pfeil dargestellt. Der Nutzer wird darüber bequem zum Golfball navigiert.

Optional ist die Navigation zum Golfball auch ohne Smartphone über ein zusätzlich erhältliches LCD Display der Blackbox oder die Übertragung der Daten auf eine Smartwatch, SmartClothing, Datenbrille oder sonstiges Wearable möglich.

Hilfsweise kann der Golfball Lageinformationen von der Blackbox erhalten, um eine schnellere Positionsbestimmung des Golfballs bei dessen Kaltstart zu ermöglichen. Um die Genauigkeit der Ortung auch unter schlechten Bedingungen zu ermöglichen, kann mittels optional integriertem Gyroskop und Accelerometer des Golfballs ein sogenanntes "Dead Reckoning" (Koppelnavigation) verwendet werden. Koppelnavigation ist die laufende näherungsweise Ortsbestimmung eines bewegten Objekts aufgrund seiner Bewegungsrichtung (Kurs) und Geschwindigkeit (Fahrt). Es wird eine Kombination aus Dead Reckoning mit GPS eingesetzt. Auf Basis der letzten Lageposition werden die Daten von Accelerometer und Gyroskop dann in Bezug gesetzt, wenn die Komponenten wieder verwertbare Messwerte liefern. Auf diese Weise kann eine genauere Auswertung der Bewegung und eine Feststellung der Lageposition nach der Bewegung ermöglicht werden.

Der Golfball besitzt eine Firmware, die einen möglichst energieeffizienten Einsatz der verbauten Sensoren und Bauteile ermöglicht, um eine möglichst lange Akku-Laufzeit zu gewährleisten. Zum einen wird der Golfball automatisch aktiviert, wenn er aus der angeschalteten Blackbox genommen wird. Die Firmware ist zudem in der Lage, die Positionsänderungen des Golfballs durch einen Schlag von der Positionsänderung durch bspw. Tragen zu unterscheiden und kann dadurch selbständig erkennen, wenn eine neue Spielbahn/ein neuer Abschlag betreten wurde. Nach dem Schlag, das Accelerometer erkennt den Stillstand, übermittelt der Golfball die aufgezeichneten Daten inklusive einer Prüfsumme per RF an die Blackbox. Nach erfolgreicher Datenübermittlung erhält der Golfball von der Blackbox eine Bestätigung der Prüfsumme und der Golfball versetzt sich daraufhin in den "Standby"-Mode. Der RF Empfänger versetzt sich in Empfangsmodus, wodurch der Golfball von der Blackbox reaktiviert werden kann. Das GPS ist deaktiviert, aber nicht ausgeschaltet, und kann binnen 100ms reaktiviert werden. Ein optionaler Accelerometer und ein optionales Gyroskop bleibt aktiv. Durch die nächste Bewegung (Schlag) wird der Golfball wieder aufgeweckt und beginnt erneut mit der Datenaufzeichnung (GPS, Accelerometer, Gyroskop).

Wenn der Spieler den Golfball nicht an der in der App angegebenen Lageposition findet, scheint es zu einem Problem bei der Lokalisierung des Golfballs gekommen zu sein. Um eine erneute Lokalisierung durchführen zu lassen, kann der Nutzer den Golfball über die Smartphone-App aufwecken. Dazu sendet die App einen Befehl zur Aktivierung des Golfballs und der Golfball wird aktiviert (Power: On). Danach kann die App einen Befehl zur erneuten Lokalisierung über die Blackbox an Golfball senden. Der Golfball ermittelt daraufhin seine Lageposition per GPS und übermittelt die aufgezeichneten Daten per RF an die Blackbox (inkl. Prüfsumme). Nach erfolgreicher Datenübermittlung erhält der Golfball von der Blackbox eine Bestätigung der Prüfsumme und der Golfball versetzt sich daraufhin wie oben beschrieben in den "Standby"-Mode. Der Nutzer erhält in der App die neuen Lageinformationen des Golfballs und kann ihn darüber finden. Der Prozess kann im Problemfall wiederholt werden.

Gemäß einer optionalen Zusatzfunktion kann der Golfball auch noch ein Mobilfunkmodul enthalten. Dadurch kann der Golfball die Daten nach Aufzeichnung mittels eines integrierten GSM-Moduls (SIM Karte, eSIM) über ein Mobilfunknetz an einen zentralen Server, der die Daten empfängt und zwischenspeichert, senden. Dort können sie unmittelbar nach der Übermittlung vom Golfball durch das Smartphone abgerufen werden. Wurden die Daten erfolgreich in eine Cloud übermittelt, werden sie vom Golfball entfernt. In diesem Fall müsste die Blackbox nicht mehr als Brücke zwischen Golfball und Smartphone genutzt werden.

Zusätzlich kann der Golfball etwaige Leuchtmittel, insbesondere LEDs umfassen, wodurch dieser bei Bedarf eine aktive Leuchtfähigkeit besitzt, um den Golfball auch in der Dämmerung oder Dunkelheit einfach wiederfinden zu können. Dazu kann der Spieler in der Smartphone App den Dämmerungsmodus auswählen und der Golfball beginnt permanent oder für einen definierten Zeitraum, bspw. für 5 Min. nach einem Schlag, zu leuchten. Denkbar ist aus Energiespargründen die Realisierung eines Blitzlichtes, das über die Smartphone App aktivierbar ist und den Ball 5 mal für 0,5 Sekunden aufblitzen lässt.

Der Golfball kann zudem verschiedene Status LEDs besitzen, um direkt am Golfball die wichtigsten Status prüfen zu können. Durch Schütteln des Golfballes kann eine Statusanzeige, farbig leuchtende LEDs, ausgelöst werden. Beispielsweise eine Anzeige des Akkuladezustandes (je nach Status) rot - gelb - grün, eine Anzeige der Verbindung zur Blackbox (OK blau, sonst aus), ein Indikator der Verbindung zum GPS-Satelliten (OK weiß, sonst aus). Die Außenhülle des Golfballs ist zudem so bedruckt, dass die leuchtenden LEDs beschriftet sind und somit dem jeweiligen Status zugeordnet werden können.

Zudem kann der Golfball einen Lautsprecher besitzen, über den akustische Signale abgesetzt werden, die den Spieler beim Auffinden des Golfballes unterstützen sollen. Findet der Nutzer den Golfball trotz Übermittlung der richtigen Lageposition nicht, weil er beispielsweise unter Laub oder im Hohen Gras liegt, kann er per Smartphone App ein Tonsignal vom Golfball auslösen, um ihn akustisch zu orten. Auch die Integration eines Temperatursensors in den Golfball ist möglich, um dem Spieler die aktuelle Außentemperatur mitteilen zu können. Die Temperatur wird kontinuierlich (alle x Min.) gemessen und aufgezeichnet. Die Funktion kann wahlweise über das Auslesen der Temperatur der elektronischen Bauteile im Kern des Golfballs, oder über einen separat in den Golfball integrierten Temperatursensor geschehen.

Durch geeignete Materialwahl und/oder Aussenflächenbeschichtung kann der Golfball zudem schwimmfähig sein. Es können so spezielle Golfbälle für Wasserhindernisse produziert werden, die bspw. leichter oder größer als normale Golfbälle und dadurch schwimmfähig sind. Die Software des Servers bzw. der Blackbox ermöglicht einen einfachen Wechsel des Balls im Spiel, wahlweise sogar nur für den Schlag über das Wasserhindernis, sodass der Spieler aufgrund des geringeren Gewichts des schwimmfähigen Balls kein spürbaren Nachteil hat.

Bauteile, die hinsichtlich ihrer Dichte variierbar sind, um die Schwimmfähigkeit zu erreichen, sind der Akku und die Vergussmassen, die es in allen möglichen Festigkeiten und Dichten gibt. Als Vergussmassen sind verschiedene Stoffe denkbar, die eine geringere Dichte als Wasser, wie Polystyrol-Schaumstoff (Styropor), Aerogel, thermoplastische Schaumteile, Balsaholz, Aerographit, Graphen Aerogel, Luft.

Um dem Spieler ein haptisches Feedback geben zu können, kann der Golfball mit einem Vibrationsmotor ausgestattet sein. Ein haptisches Feedback kann beispielsweise eingesetzt werden, um dem Spieler einen betriebsbereiten Golfball anzuzeigen. Das haptische Feedback besteht darin, dass der Ball 3x nacheinander kurz vibriert.

Um die beim Golfspiel üblichen Distanzen zwischen Spieler und Golfball von bis zu 300 Metern zu überbrücken, reichen herkömmliche Kommunikationsprotokolle wie z.B. Bluetooth nach heutigem Erkenntnisstand nicht aus. Um die Kommunikations-Reichweite zu erhöhen und Daten zwischen zu speichern, wird eine Art Brücke bzw. Gateway benötigt. Die Blackbox dient als mobiler, reichweitenstarker Vermittler zwischen Ball und Smartphone (Smartwatch, Smart- oder VR-Brille, andere Wearables, Smart Clothing, ...), indem sie die Informationen vom Ball per Funk im SRD-Band empfängt, zwischenspeichert und diese für das Smartphone per Bluetooth bereitstellt. Für den Nutzer bietet der Prozess die aktuell bestmögliche User Experience und Convenience, da die Gateway-Funktion dem Nutzer gegenüber in den Hintergrund gerückt wird und die zahlreichen Zusatzfeatures der Blackbox (bspw. Ladefunktion für das Smartphone) im Vordergrund stehen. Die Blackbox soll komfortabel am Caddie, am/im Golfbag, -cart oder an der Kleidung des Spielers befestigt werden können oder kann ein Bestandteil davon sein. Gleichzeitig dient die Blackbox zum Laden der Akkus in den Bällen. Folgende Vorteile werden so erzielt:
- Durch die Kommunikation von Smartphone <-> Blackbox <-> Golfball können ausreichend lange Distanzen überbrückt werden
- Bluetooth ist mit jedem Smartphone kompatibel, es wird kein separates Dongle am Smartphone benötigt
- Die Kopplung von Smartphone und Blackbox per Bluetooth geht schnell und einfach, zuvor bereits gekoppelte Geräte verbinden sich automatisch wenn sie in Reichweite sind
- Bluetooth gewährleistet eine stabile Datenübertragung im Nahbereich
- Bluetooth Low Energy benötigt besonders wenig Energie
- Mehrere Blackboxen könnten untereinander per Funk kommunizieren (Mesh-Network)
- Die Blackbox bietet Schutz für die Bälle und dient als Transportmittel
- Die Blackbox beinhaltet einen ausreichend großen Akku, über den das Smartphone des Nutzers während der Golfrunde aufgeladen werden kann

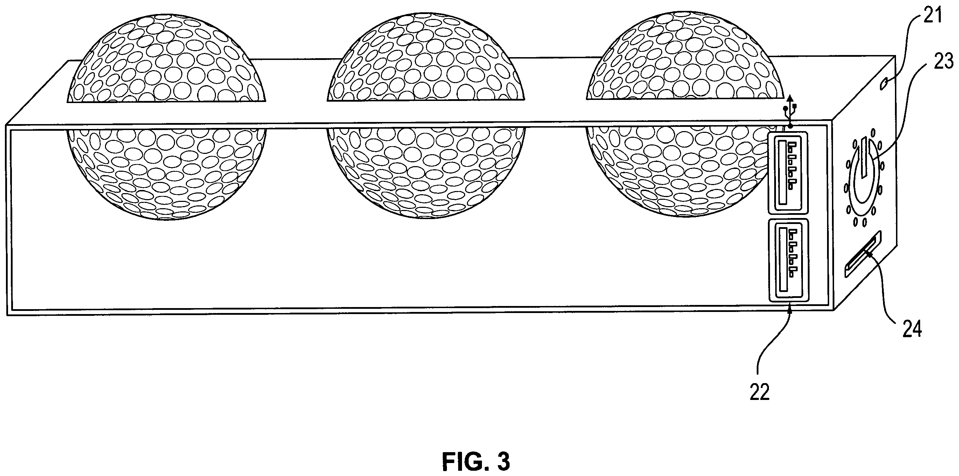

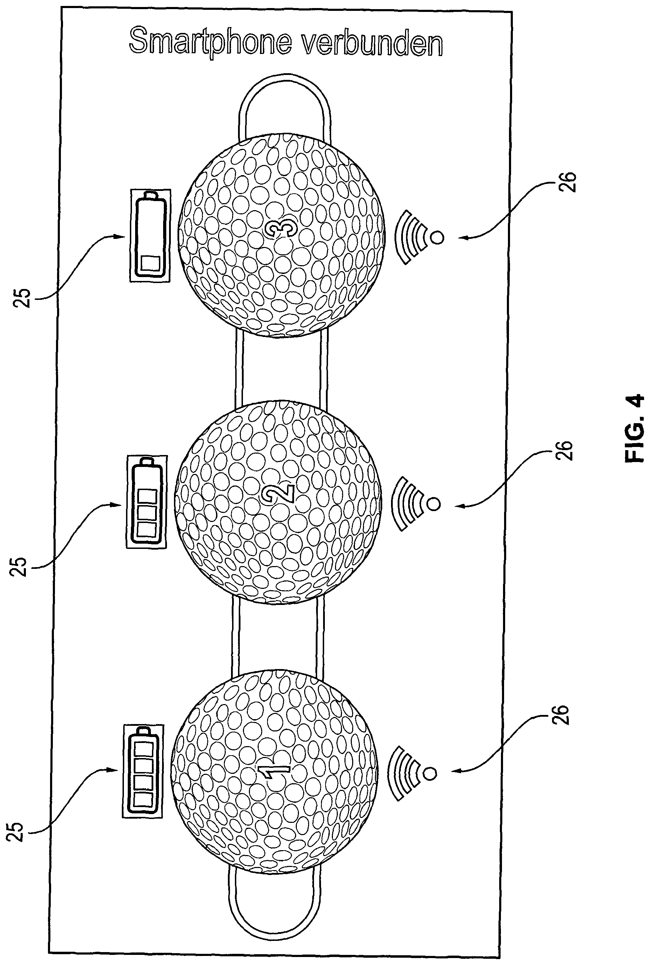

Die Figuren 3 und 4 zeigen eine Seiten- sowie Draufsicht auf die erfindungsgemäße Blackbox (mobile Ladestation). Zu sehen sind drei in die Blackbox eingelegte Golfbälle. Die Blackbox sieht zur Bedienung einen Resetknopf 21, eine USB-Schnittstelle 24 zur Ladung des internen Akkus der Blackbox, zwei USB-Schnittstellen 22 für den Anschluss externer Geräte, um diese Aufzuladen, sowie einen Powerknopf 23 mit Statusanzeige.

Auf der Oberseite befinden sich etwaige Statusanzeigen 25, die pro Aufnahmemittel den Ladestatus der eingelegten Golfbälle anzeigen. Weiterhin sind visuelle Anzeigen 26 als Indikator für den Verbindungsstatus zwischen Blackbox und Golfbällen vorgesehen. Einzelheiten der Blackbox sollen nachfolgend diskutiert werden.

Zu den Grundkomponenten der Blackbox zählt ein Mikrocontroller, ein lokaler Speicher, eine wiederaufladbare Energiequelle (Akku) inklusive einem Steckernetzteil zwecks Anschluss an den Hausstrom. Optional kann ein USB-Port zur Ladung verwendet werden. Die Elektronik umfasst einen Laderegler (Akku) und eine Ladelogik, insbesondere für das Energiemanagement und den Energiesparmodus, Mittel zur drahtlose Energieübertragung an die Golfbälle, um deren Akkus zu laden, Spannungsregler, einen RF Empfänger/Sender (Funkmodul für Kurzstreckenfunk) inkl. Antenne, einen Bluetooth Empfänger/Sender inkl. Antenne um die Blackbox mit einem Smartphone zu koppeln. Ein oder mehrere USB-Ports zum Anschluss von externen Geräten an die Energiequelle. Verwendet werden USB-Ports der gängigen Typen, bspw. Typ-A, -B oder -C. Das Fixierungs- und Ausrichtungselement für den Golfball ist ein separates Element (Stahl, Magnet, ...), das in der Blackbox enthalten ist, bspw. eingelassen in die Ballhalterung, und mit einem Fixierungs- und Ausrichtungselement im Golfball korrespondiert.

Die drei Aufnahmemittel der Blackbox fixieren die Bälle und ermöglichen gleichzeitig, dass sie einfach entnommen werden können (mechanisch oder magnetisch). Der Spieler kann die Golfbälle einfach in die Halterung der Blackbox legen und sie richten sich automatisch aus, um die zwecks Ladung und Kommunikation bestmögliche Lageposition einzunehmen. Das Aufladen der Blackbox kann über eine Steckdose/Hausstrom oder den Anschluss an eine andere geeignete Energiequelle, bspw. Bordstrom in einem PKW, im Golfcart oder andere tragbare Energiespeicher, erfolgen. Während des Ladevorgangs zeigt die Blackbox über die Anzeige 23 den Ladestand und Ladestatus an. Wird die Blackbox von Stromnetz getrennt, kommt es zur Deaktivierung der Anzeige 23.

Durch einmaliges Antippen des Power-Buttons 23 kann der Ladestand der Blackbox und der Golfbälle über eine Statusanzeige an der Blackbox angezeigt werden. Auch kann während des Spiels bzw. der Verwendung eines Golfballs, der Ladestand seines Akkus an der Blackbox angezeigt bspw. in der App zu sehen sein. Dazu wird der Ladestand regelmäßig vom Golfball an die Blackbox übermittelt. Die Blackbox signalisiert über akustisches und visuelles Feedback eine Warnung vor einem zu niedrigen Ladezustand eines Golfballes, zum Beispiel 5-mal ein akustisches Warnsignal in Verbindung mit schnellem Blinken der Ladestandanzeigen des jeweiligen Golfballs. Die Smartphone-App sendet zudem eine Warnmeldung und schlägt automatisch den Golfball mit dem höchsten bzw. geeignetsten Ladestand vor. Auch kann der Ladezustand der Blackbox in der Smart-App angezeigt werden und vor einem zu niedrigen Ladestand gewarnt werden. Sollte der Akku der Blackbox nach Abschluss einer Spielrunde nicht mehr ausreichend Energie für eine vollständige Spielrunde verfügen, wird der Nutzer hierauf hingewiesen und aufgefordert die Blackbox am Hausstrom aufzuladen.

Optional kann der Spieler über die App den Energiesparmodus aktivieren, um die Runde dennoch zu starten. Optional kann über die App auch ein anderer Spielmodus ausgewählt werden, bei dem der Spieler vorab oder während des Spielbetriebs festlegt, wie viele Bahnen er spielen möchte.

Das Pairing der Blackbox mit dem Smartphone, um sämtliche Statistiken und Daten auf dem Smartphone angezeigt zu bekommen erfolgt folgendermaßen:
Nach dem Einschalten prüft die Blackbox, ob das zuletzt verbundenes Smartphone in Reichweite ist. Wird das bekannte Smartphone gefunden, wird das Smartphone automatisch mit der Blackbox gekoppelt. Eine erfolgreiche Verbindung wird als Feedback die entsprechende Pairing-Status LED 21 an der Blackbox 21 sowie in der App angezeigt. Ist die Kopplung nicht erfolgreich, wird eine Fehlermeldung inkl. Hilfestellung zur Behebung in der App angezeigt. Für den Fall, dass die Blackbox kein bekanntes Smartphone in Reichweite detektiert, versetzt sich diese in den Pairing-Mode. Der Spieler erhält dann einen Hinweis auf die verfügbare Blackbox in Reichweite auf seinem Smartphone. Nach Auswahl der gewünschten Blackbox am Smartphone beginnt der bekannte Kopplungsprozess und der Spieler wird zur Eingabe eines Verifizierungscodes am Smartphone aufgefordert. Nach erfolgreicher Kopplung erhält der Spieler auch hier ein Feedback an der Blackbox und in der App. Ist der Kopplungsprozess nicht erfolgreich erhält der Spieler auch in diesem Fall eine Fehlermeldung inkl. Hilfestellung zur Behebung auf dem Smartphone.

Um Golfbälle mit der Blackbox in Betrieb zu nehmen müssen diese zunächst mit der Blackbox verbunden werden. Dazu muss der Golfball in die Halterung der Blackbox eingelegt werden. Der Golfball wird automatisch mit der Blackbox verbunden und erhält von ihr eine eindeutige ID zugewiesen. Nach erfolgreicher Verbindungsinitialisierung gibt die Blackbox akustisches und visuelles Feedback, bspw. ein akustisches Signal (positiver Dreiklang o.ä.) und dreimal Blinken der Pairing-Status-Anzeige. Der Golfball wird dann dem zur Blackbox gehörenden User-Account zugeordnet und wird aufdem mit der Blackbox gekoppelten Smartphone in der App angezeigt. Das Smartphone sendet eine Mitteilung zur erfolgreichen Pairing und die Anzeige Ladestand & Ladestatus des Golfballs wird an der Blackbox und in der App aktualisiert.

Die Trennung eines Golfball von einer Blackbox ist nicht zwingend notwendig. Zur Verwendung eines Golfballs mit einer anderen Blackbox reicht es aus, den Ball mit der anderen Blackbox zu verbinden. Auch kann der Spieler die mit seiner Blackbox gekoppelten Golfbälle jederzeit über die Smartphone App trennen. Bälle von Mitspielern können ebenfalls mit der Blackbox verbunden werden. Dazu legt der Spieler den Golfball vor der Spielrunde in eine Halterung der Blackbox und der fremde Golfball wird automatisch mit der Blackbox verbunden. Die Blackbox prüft die auf dem Golfball befindliche ID und die enthaltenden Daten und erkennt im Zusammenspiel mit der Smartphone-App und einem Abgleich mit einem zentralen Serversystem der Plattform, ob der Ball bereits einem Spielerkonto zugewiesen ist. Ist der fremde Ball bereits einem fremden Spielerkonto zugewiesen, zeigt die Smartphone App das Spielerkonto des Mitspielers an und der Spieler kann ihn zur Golfrunde hinzufügen. Der Spieler hat zudem die Möglichkeit den fremden Ball zu resetten und die ID neu zu vergeben. Sämtliche Statistiken werden im Spielverlauf über das Smartphone des Spielers erfasst und an den zentralen Server übermittelt, sodass der Mitspieler während des Spiels mit seinem Smartphone ebenfalls Zugriff auf die Daten hat.

Ist der fremde Ball noch keinem Spielerkonto zugewiesen, kann der Spieler zwischen zwei Modi wählen. Der Spieler kann einen am Server registrierten Spieler explizit durch Angabe eines Identifikationsmerkmals des Mitspielers (bspw. seine am Server registrierte E-Mail-Adresse) einladen und der Ball kann dem angegebenen Account des Mitspielers zugeordnet werden und beide können die Statistiken verfolgen. Alternativ kann der Ball auch ohne Angabe von Benutzerdaten eingebunden werden. Die Spieldaten werden für die Allgemeinheit/Basisstatistiken dennoch ermittelt und aufgezeichnet. Im Anschluss an das Spiel kann der Spieler die Daten an den Mitspieler versenden, indem er dessen E-Mail-Adresse angibt. Ist die E-Mail-Adresse bereits mit einem Server Nutzerkonto verknüpft, kann der Mitspieler die Daten direkt seinem Account hinzufügen. Ist die E-Mail-Adresse noch nicht mit einem Server Nutzerkonto verknüpft, erhält der Mitspieler eine Einladungs-Email. Klickt er auf den Bestätigungslink, wird sein Kundenkonto vorbereitet und er wird im Browser aufgefordert sein Kennwort und Stammdaten anzugeben. Nach erfolgreicher Eingabe wird sein Kundenkonto eingerichtet und er kann die Statistiken einsehen.

Der Spieler erhält auf seinem Smartphone einen Hinweis, sofern er einen fremden, zu diesem Zeitpunkt im Spiel befindlichen Golfball findet und in seine Blackbox einlegt. Die Blackbox kann die auf dem Golfball befindliche ID prüfen und so feststellen, dass der Ball nicht dem Spieler zuzuordnen ist. Durch die Serveranbindung kann zudem festgestellt werden, dass sich der Golfball derzeit im Spiel befindet. Dies kann dem Spieler signalisiert werden und wird gebeten den Ball dort abzulegen, wo er ihn gefunden hat, ggfs. inkl. Assist, damit der Ball zum Ursprungsort zurück gelangt. Befindet sich der gefundene Ball nicht mehr in einem aktiven Spiel befinden, wird er als verloren gewertet und mit der Blackbox des Spielers verbunden

Dem Spieler werden weiterhin Informationen über verfügbare Firmware-Updates in der Smartphone App angezeigt, wobei Updates der Firmware der Golfbälle und der Blackbox heruntergeladen werden können, um sie dann zu installieren. Die Smartphone-App kann auf die Blackbox schreiben bzw. diese programmieren. Die Blackbox kann auf die Golfbälle schreiben bzw. diese programmieren. Der Spieler erhält ein Feedback über Firmware Updates für Golfball oder Blackbox in der Smartphone App und per E-Mail. Daraufhin kann das Software Update per App auf sein Smartphone geladen werden und bei der nächsten Kopplung von Blackbox und Smartphone erscheint die Aufforderung zur Installation des Updates. Hier erhält der Spieler die Wahl, das Update entweder sofort oder später auszuführen. Der Hinweis auf Installation des Updates wird nach der nächsten Golfrunde erneut angezeigt.

Die bereits zuvor angedeutet kann die Blackbox jedem Golfball eine einmalige ID zuweisen, um ihn eindeutig zu identifizieren. Hierbei wird jedem Ball eine variable ID von der Blackbox zugewiesen. Jede ID ist einmalig und der Golfball somit eindeutig identifizierbar. Die vergebene ID wird im Hintergrund über das Smartphone mit einem zentralen Server abgeglichen. So kann jeder zuvor mindestens einmal registrierte Ball seinem Eigentümer zugeordnet werden (auch historisch rückwirkend). Ein Auswählen des aktuellen Balles erfolgt, indem man ihn in die Blackbox legt und mittels der drahtlosen Energieübermittlung Daten übertragen werden. Im Gegensatz zur Funkstrecke ist dies selektiv, da die Reichweite nur 1-2cm beträgt.

Die Blackbox kann sich mit einem oder mehreren Golfbällen über RF verbinden, um über eine große Reichweite bidirektional drahtlos mit den Golfbällen kommunizieren zu können. Radio Frequency: ISM Band (bspw. 868 MHz-Band = 863-870 MHz, demensprechend Frequenzbandbreite mit mehreren Kanälen), das sind die Bereiche in denen ohne zusätzliche Genehmigung gefunkt und Daten übermittelt werden dürfen. Das 868 MHz-Band kann weltweit genutzt werden. Gegebenenfalls durch eine hohe Funkgerätedichte auftretende Störungen oder Probleme aufgrund von Frequenzüberlagerungen -wie sie z.B. im städtischen Bereich vorkommen können - sind auf Golfplätzen nicht zu erwarten. Unter Laborbedingungen werden Reichweiten bis ca. 1.000m erreicht. Grundsätzlich gilt: je niedriger die Frequenz, desto höher die Reichweite, aber desto größer die Antenne bei gleichbleibender Energieeffizienz (kleinere Antenne möglich, aber mehr Energie benötigt, Reichweite sinkt dann vermutlich). Die Kommunikation mit mehreren Bällen ist gleichzeitig (reine Softwarefunktion) möglich.

Die Blackbox und das Smartphone können per Bluetooth miteinander gekoppelt werden, um eine mit jedem Smartphone kompatible, drahtlose bidirektionale Kommunikation zu ermöglichen. Die Blackbox tritt dadurch als Vermittler/Dolmetscher zwischen Golfball (RF) und Smartphone (Bluetooth) auf.

Die Spieldaten sollen auch dann aufgezeichnet werden, wenn das Smartphone des Spielers nicht mit der Blackbox verbunden ist. Zu diesem Zweck empfängt die Blackbox Daten vom Golfball und speichert sie zwischen in einem internen Speicher. Der Spieler kann diese später durch Kopplung, bspw. des Smartphones per Bluetooth aus der Blackbox auslesen.

Unter Umständen ist ein Reset der Golfbälle gewünscht. Dazu kann der Spieler einen Reset-Button 21 der Blackbox oder in der Smartphone-App drücken, um die Software von den Golfbällen in den Auslieferungszustand zu versetzen.

Die Blackbox bietet assisted GPS für schnellere und genauere Positionsbestimmung des Golfballs über Lageinformation des Smartphones. Dazu kann die Blackbox Lageinformationen des gekoppelten Smartphones an den Golfball senden, um eine schnellere Positionsbestimmung des Golfballs bei dessen Kaltstart zu ermöglichen. Ergänzend oder alternativ kann die Blackbox in einem regelmäßigen Turnus die A-GPS Hilfsinformationen des in ihr befindlichen GPS Moduls empfangen und kann so ihre Lageposition bestimmen. Diese Information gibt sie nach dem Anschalten an die gekoppelten Golfbälle weiter. Diese können die eigene Positionsbestimmung daher schneller und genauer durchführen. Ein Smartphone wird in diesem Fall für Assisted GPS nicht benötigt. Sollte dennoch ein gekoppeltes Smartphone vorliegen, werden dessen A-GPS Daten ebenfalls ausgelesen und mit denen der Blackbox gematched. Auf diese Weise wird das bestmögliche Ergebnis der Lokalisierung erzielt und an die Golfbälle weitergeleitet. Die Blackbox empfängt nach dem Anschalten die A-GPS Hilfsinformationen vom gekoppelten Smartphone und leitet sie an den Golfball weiter. Diese können ihre Positionsbestimmung daher schneller und genauer durchführen. Im Spielverlauf kann ein regelmäßiger Abgleich der A-GPS Hilfsinformationen vom gekoppelten Smartphone und der Lageinformation vom Golfball stattfinden, um die Genauigkeit zu steigern. Dies ist kurz vor jedem weiteren Schlag außerhalb des Grüns einer Bahn sinnvoll, da Golfball, Blackbox und Smartphone zu diesem Zeitpunkt recht nah beieinander sind.

Der Spieler kann den Akku der Blackbox auch nutzen, um andere Geräte wie bspw. sein Smartphone aufzuladen. Die Blackbox verfügt über einen umfangreichen Energiespeicher der so dimensioniert ist, dass er neben dem Aufladen der Blackbox und dem Spielbetrieb die Möglichkeit bietet, weitere Geräte mit Energie zu versorgen. Der Spieler kann diese Geräte über die USB-Ports 22 der Blackbox anschließen und sie werden automatisch mit Energie versorgt, sofern die Blackbox eingeschaltet ist. Die Blackbox ist dabei so konfiguriert, dass sie nie mehr Energie abgibt, als voraussichtlich mindestens für das Beenden der aktuellen Spielrunde benötigt wird. Für eine vollständige Spielrunde eines Spielers wird eine Laufzeit von bis zu 6 Stunden angenommen. Bevor der Ladestand des Akkus der Blackbox unter das für die (restliche) Spielrunde benötigte Energielevel fallen, wird keine Energie mehr an angeschlossene Geräte abgegeben.

Der Spieler kann einen Energiesparmodus der Blackbox aktivieren, sofern die Blackbox nicht mehr über ausreichend Energie für eine vollständige Runde verfügt. Im Energiesparmodus wird die Kommunikation zwischen Golfball, Blackbox und Smartphone auf ein Minimum reduziert, um möglichst wenig Energie zu verbrauchen, aber dennoch alle Daten aufzuzeichnen. Auch kann der Spieler festlegen wie viele Bahnen noch gespielt werden sollen, damit die Blackbox errechnet, ob dafür genügend Energie zur Verfügung steht. Der Spieler kann vor Beginn eines Spiels festlegen, wie viele Bahnen er spielen möchte. Der Spieler kann während des Spiels, nach Hinweis der Blackbox auf nicht mehr ausreichende Energiereserven festlegen, wie viele Bahnen er noch spielen möchte. Alternativ kann er in den Energiesparmodus wechseln.

Die Blackbox kann zudem weitere Zusatzfunktionen bereitstellen. So zum einen das Aufladen der Blackbox über einen Akku eines Golfcaddies. Die Blackbox kann per Kabel an den Akku eines Golfcaddies angeschlossen werden, um diesen anstelle des Hausstroms zum Aufladen der Blackbox zu verwenden. Ein Adapterkabel zum Anschluss an die Zentralbatterie der gängigen Golfcaddies kann bereitgestellt werden. Weiterhin ist es möglich, die Blackbox über den Akku eines Golfcarts aufzuladen. Möglich ist auch eine drahtlose Aufladung der Blackbox. Die Blackbox beinhaltet Induktionsspulen, die zur Aufladung der Blackbox genutzt werden können. Der Nutzer muss die Blackbox dafür lediglich auf ein Ladegerät für drahtlose Energieübertragung stellen und die Blackbox wird automatisch aufgeladen. Die Blackbox kann natürlich auch an jeder weitere Energiequelle per Kabel angeschlossen und geladen werden. Gemeint sind hierbei im Speziellen tragbare Energiequellen/Power-Packs, die man von Smartphones kennt.

Es ist wünschenswert, dass die aufgezeichneten Spieldaten auch dann an einen Server gesendet werden, wenn kein Smartphone mit der Blackbox verbunden ist. Die Blackbox kann optional die empfangenen Daten nach Aufzeichnung über ein integriertes GSM Modul (SIM Karte, eSIM) über ein Mobilfunknetz an einen Server übermitteln, der die Daten empfängt und zwischenspeichert. Dort können sie unmittelbar nach der Übermittlung vom Golfball durch das Smartphone abgerufen werden. Wurden die Daten erfolgreich in die Cloud übermittelt, werden sie von der Blackbox entfernt. Dazu muss der Spieler die Blackbox mit einem Datentarif ausstatten und die Blackbox sendet die Daten über ein Mobilfunknetz in die Cloud. Der Spieler kann die Daten aus der Cloud bspw. per Smartphone App unmittelbar nach der Übermittlung durch die Blackbox oder zu einem beliebigen anderen Zeitpunkt abrufen.

Aufgezeichneten Spieldaten können auch auf ein externes, mobiles Speichermedium geschrieben werden: Die Blackbox empfängt die Daten vom Golfball und speichert sie zwischen. Der Spieler kann einen USB-Stick in den USB-Port der Blackbox stecken und die Blackbox überträgt die aufgezeichneten Spieldaten auf den USB-Stick. Die Löschung der Spieldaten von der Blackbox kann nur über das Smartphone erfolgen.

Die Blackbox kann sich mit anderen in Reichweite befindlichen Blackboxen verbinden, um die Reichweite zwischen Golfball und Blackbox zu optimieren, indem ein Mesh network aus Blackboxen aufgebaut wird. Blackboxen, die sich in gegenseitiger Reichweite befinden, können untereinander per RF kommunizieren und sich verbinden. So können Funkstrecken über größere Distanzen aufgebaut werden. Sollte der Golfball eines Spielers einmal nicht direkt mit seiner Blackbox kommunizieren können, kann die Kommunikation über die in nächster Nähe des Golfballs befindliche Blackbox stattfinden. Diese empfängt von der Blackbox des Spielers die Information, dass der Ball außer Reichweite ist und kann dann die Daten vom Golfball empfangen und sie an die andere Blackbox weiterleiten.

Um den Schlag durch die App noch genauer auswerten zu lassen, wird das Schlaggeräusch, d.h. der Klang des Schlages, durch ein in die Blackbox integriertes Mikrophone aufgenommen und der Smartphone-App zur Auswertung zur Verfügung gestellt. Das Zusammenspiel aus Flugbahn, -kurve und Klang im Treffmoment ermöglicht eine präzise Auswertung, wie der Ball vom Schlägerblatt getroffen wurde (vorne, mitte, oben, unten, hinten) und ermöglicht in Kombination mit den Flugdaten des Golfballs die genaue Analyse zwecks Auswertung etwaigen Fehlverhaltens beim Schlagen.

Der Spieler kann in der Smartphone-App eine Spieleraktionen vor oder nach einem registrierten Schlag "einchecken", damit sie in die Statistiken und Auswertungen einfließen. Diese Aktionen können der Statistik auch über an der Blackbox befindliche Hardware Buttons zugewiesen werden, indem der Nutzer die Buttons drückt. Die Blackbox weist die Aktion dann dem entsprechenden Ball und Schlag zu. Ein erfolgreicher Check-In wird mit einem dezenten Ton-Signal und Blinken einer Status LED im Button quittiert und ist unmittelbar danach in der App sichtbar.

Zu den Aktionen zählen:
- Luftschlag (Schlag zählt)
- Strafschlag
- Ball im Aus
- Provisorischer Ball: Spieler spielt einen zweiten Ball, weil er sich unsicher ist, ob der zuvor gespielte Ball weiterhin spielbar ist.
- Zuvor gespielter Ball wird weitergespielt: provisorischer Ball wird automatisch aus dem Spiel genommen
- Provisorischer Ball wird weitergespielt: zuvor gespielter Ball wird automatisch aus dem Spiel genommen und ein Strafschlag hinzugefügt

Grundsätzlich kann der Nutzer Aktionen per App "einchecken", indem er die gewünschte Option während des Spiels auswählt.

Der Spieler kann zudem Golfequipment, insbesondere Golfschläger, vor einem Schlag "einchecken", damit sie in die Statistiken und Auswertungen einfließen. Grundsätzlich kann der Nutzer Schläger per App "einchecken", indem er die gewünschte Option während des Spiels auswählt. Aus Gründen der Genauigkeit, Usability und User Experience wird eine Kombination von Hardware- und Software Check-In durchgeführt. Der Hardware Check-In funktioniert automatisch, ohne dass der Spieler aktiv werden muss. Vor dem Spiel befestigt der Nutzer spezielle Tags am Kopf jedes Schlägergriffs. Diese Tags beinhalten eine bestimmte Technologie (NFC, RFID, UHF, ggfs. HR/RF) und eine eindeutige Beschriftung (bspw. i7 oder Eisen 7) um dem richtigen Schläger zugewiesen werden zu können. Nimmt der Spieler einen Schläger aus dem Bag, erkennt die Blackbox den aus dem Bag genommenen Schläger anhand der sich verändernden Sendestärke des Tags am entnommenen Schläger und weist ihn automatisch dem folgenden Schlag zu. Entnimmt der Spieler mehrere Schläger auf einmal, erkennt die App anhand von Spieldaten und Kontext, welcher Schläger zu welchem Schlag gehört.

Der Spieler kann sein Smartphone an der Blackbox befestigen, damit es beim Spiel immer griffbereit ist. Eine Halterung sichert das Smartphone während des Transports über den Golfplatz sicher an der Blackbox. Eine Ladefunktion wird optional angeboten. Das Smartphone fügt sich dabei nahtlos in das Design der Blackbox ein und kann als Display der Blackbox agieren.

Für Spieler, die eine Darstellung weiterer Funktionen auf einem Display, das nicht das Smartphone ist, wünschen, kann ein günstiges Mini-Tablet angeboten werden, auf dem die App installiert wird. In Kooperation mit Tablet-Herstellern könnten Sondereditionen der Blackbox inkl. Einlasshalterung für ein bestimmtes Tablet angeboten werden. Ein externes Display kann an die Blackbox angeschlossen werden, damit die App ohne Smartphone verwendet werden kann.

Um die Benutzeroberfläche der Smartphone-App abbilden zu können, ist ein deutlich komplexeres Gerät als ein Monitor notwendig. Die Darstellung auf dem externen Monitor bezieht sich dementsprechend auf einfach darstellbare Status-Informationen auf einem einfachen Display:
- Score-Karte (Anzahl Schläge, sortiert nach Spielbahnen)
- Entfernung zum Ball inkl. Navigation zum Ball, analog alter Navigationssysteme inkl. Entfernungsangabe und Richtungspfeil.

Bei offiziellen Wettspielen und Turnieren ist die Verwendung von elektronischen Hilfsmitteln, die gegenüber anderen Spielern einen Vorteil bieten, untersagt. Das System kann ohne Smartphone verwendet werden, indem der Turnier-Modus aktiviert wird. Golfball und Blackbox zeichnen weiterhin alle Daten auf, der Spieler kann diese während des Spiels aber nicht nutzen. Auf dem Display wird lediglich die Score-Karte angezeigt.

Die Blackbox kann optional direkt mit einem WLAN verbunden werden, damit sie bei bestehender Internetverbindung im WLAN direkt mit dem Serversystem in der Cloud kommunizieren kann. Die Blackbox übermittelt die empfangenen Daten nach Aufzeichnung über ein integriertes WLAN Modul, sobald sie in Reichweite eines verbundenen und an das Internet angeschlossenen WLANs gelangt, an einen Server, der die Daten empfängt und zwischenspeichert. Dort können sie unmittelbar nach der Übermittlung vom Golfball durch das Smartphone abgerufen werden. Wurden die Daten erfolgreich in die Cloud übermittelt, werden sie von der Blackbox entfernt.

Nachfolgende sollen noch kurz die Grundfunktionen der Smartphone-App zusammengefasst werden. Die App bietet eine Anzeige von Golfplätzen in der Nähe des Nutzers, insbesondere
- Karten- und Listenansicht
- Anzahl Spielbahnen inkl. Karten
- Spielvorgabe
- Kosten (Greenfee, Trainingsanlagen)
- Kontaktdaten

Zudem lassen sich Spielerprofils verwalten und darstellen. Ein Profil umfasst die folgenden Informationen:
- Vorname, Nachname
- Profilbild
- E-Mail
- Handicap
- Spielvorgabe
- Abschlags-Tee (Farbe)

Weiterhin können Informationen zur Spielform verwaltet werden, wobei die folgenden Optionen bereitgestellt werden:
- Lochspiel
- Zählspiel
- Zählspiel nach Stableford
- Zählspiel gegen Par
- Texas Scrambling

Die App bietet zudem ein Anzeige der Lageposition des Golfballs auf der Karte, insbesondere mit folgenden Informationen:
- Karte der aktuellen Spielbahn inkl. Basisinfos
- Länge der Bahn
- Par
- Aktuelle Schlagzahl
- Anzeige der Lageposition des Golfballs
- Anzeige der Lageposition der Fahne
- Detailansicht wählbar
- Entfernung zum Grün-Anfang
- Entfernung zur Grün Mitte
- Entfernung zum Grün-Ende
- Entfernung zur Fahne
- Verbindung zwischen beiden Punkten mit verschiebbarem Zielpunkt
- Anzeige der Distanz vom Golfball zum Zielpunkt
- Anzeige der Distanz vom Zielpunkt zur Fahne

Die Datenanalyse und Datenaufbereitung der empfangenen Balldaten stellt folgende Informationen bereit:

### (Modell zur Berechnung der Flugkurven, Statistiken)

### Filterkriterien für Statistik

- Schläger (einer, mehrere)
- Runde (alle, letzte, letzte 10, letzte 20, ...)
- Kurs (alle, letzte, bestimmte)
- Entfernung zum Ziel
- Lage (Tee, Fairway, Sand, Rough, sonstiges)
- Nach Score (Par 3, Par 4, Par 5)
- Nach Art (Putting)

### Vom Tee

- Fairway getroffen (%)
- Nach links verfehlt (%)
- Nach rechts verfehlt (%)
- Typische Schlaglänge (m)

### Grün angespielt

- Näher als 15m an Fahne (%)
- Zu kurz (%)
- Nach links verfehlt (%)
- Nach rechts verfehlt (%)
- Zu lang (%)

### Scoring

- Condors (%)
- Albatrosses (%)
- Eagles (%)
- Birdies (%)
- Pars (%)
- Bogeys (%)
- Double Bogeys (%)
- +3 (%)
- +4 (%)

### Vergleich

- Gegenüberstellung der Werte mit anderen Spielern, aufgeteilt nach
- Global
- Kontinenten
- Ländern
- Regionen
- Kursen
- Freunden

### Schlaganalyse

- Analyse der einzelnen Schläge, hinsichtlich Insights (Hook, Slice, ...)
- Vorschlag von Übungen / Trainings, um Spielfähigkeiten zu verbessern

### Zudem wird eine Aufbereitung von Statistiken für ganze Golfplätze und einzelne Spielbahnen der Plätze angeboten, u.a. im Detail

- Bereitstellung der Informationen für Spieler
- Durchschnittliches Ergebnis
- Durchschnittliches Handicap
- Durchschnittliche Spielzeit
- Schwierigste Spielbahn
- Fairway / Green / ... getroffen
- Putts pro Bahn etc
- Erstellen von Statistiken basierend auf bestimmten Spielerprofilen

Mit der App wird dem Spieler auch eine Navigation auf dem Golfplatz (Positionsbestimmung, Hindernisse, Grüns, Fahne, Löcher) angeboten sowie die Möglichkeit einer digitalen Score-Karte. Die App bietet darüber hinaus die Übertragung der Daten in die Cloud (Server im Internet), das Spielen mehrerer Bälle pro Runde (Einzelspieler & Flight), Einladung von Spielern zur Golfrunde (mehrere Spieler mit einer BB, mehr als 3 Bälle an BB), Hinzufügen von Spielern zu einer Golfrunde, Zuweisung von Golfbällen

Der Spieler kann für eine Spielrunde relevante Informationen bereits vorab herunterladen und das Smartphone im Flugmodus (Bluetooth aktiviert) verwenden, um ungestört zu sein. Der Offline-Modus ermöglicht das ungestörte Golfspiel bei gleichzeitig vollständiger Nutzbarkeit de Systems, wobei der Upload der Spieldaten in die Cloud per Smartphone aufgrund des aktiven Flugmodus nicht möglich ist. Wird der Flugmodus deaktiviert, kann der Nutzer seine Spieldaten unmittelbar an einen Server in der Cloud übermitteln.

Grundsätzlich kann die App durch Auswertung der Schlagdaten (Distanz, Schlaggeschwindigkeit, Flugbahn, Spin, ...) in Kombination mit dem Kontext (Lage im Sand, Rough oder auf dem Grün) in den meisten Fällen automatisch eine Zuweisung des Schlägers zu einem Schlag durchführen. Auch bestimmte Aktionen können softwareseitig erfasst und zugewiesen werden, bspw. Ball im Aus, Ball im Wasserhindernis oder Ball im Loch (Bahn beendet). Diese Rückschlüsse können in bestimmten Konstellationen aber fehleranfällig sein (bspw. Nutzung einer 7er Eisens für ein Chip-and-Run auf dem Vorgrün, Nutzung des Putters kurz vor dem Grün, Luftschlag, ...). Daher ist der Check-In von Schlägern und Aktionen auch per Hardware vorgesehen. Die Kombination aus Check-In per Hardware im Zusammenspiel mit der App schafft die bestmögliche Genauigkeit, Usability und User Experience. Erfasste Check-Ins können unmittelbar danach in der App eingesehen und editiert werden.

Die App bietet zudem eine Reihe von Statusanzeigen, insbesondere eine Pairing-Zentrale mit Statusanzeige (Paired, unpaired), Ladekapazität Ball, Ladekapazität Blackbox, Ladestatus Ball, Ladestatus Blackbox, Pairingstatus Ball, Statusanzeige in Blackbox (LEDs) und App über Ladestand, Ladeaktivität, voraussichtliche Ladedauer,etc..

## Patentansprüche

1. Mobile Ladestation für wenigstens ein Ballspielgerät, insbesondere in Form eines Golfballes, mit wenigstens einer internen Energiequelle und wenigstens einem Aufnahmemittel zur Aufnahme und Fixierung wenigstens eines Ballspielgerätes mit integrierter Elektronik (10), wobei das wenigstens eine aufgenommene Ballspielgerät durch die wenigstens eine interne Energiequelle aufladbar bzw. mit Energie versorgbar ist, **dadurch gekennzeichnet, dass** die mobile Ladestation ein erstes Kommunikationsmodul zur drahtlosen Kommunikation mit wenigstens einem Ballspielgerät gemäß einer ersten Übertragungstechnologie und wenigstens ein zweites Kommunikationsmodul zur Kommunikation mit einem Nutzerendgerät gemäß einer abweichenden Übertragungstechnologie aufweist und innerhalb der Ladestation eine Kopplung beider Kommunikationsmodule realisiert ist, um Daten zwischen Nutzerendgerät und Ballsportgerät weiterleiten zu können.

2. Mobile Ladestation nach Anspruch 1, **dadurch gekennzeichnet, dass** die Ladestation ein oder mehrere Induktionsspulen für die induktive Aufladung eines aufgenommenen Ballspielgerätes aufweist, wobei vorzugsweise pro Aufnahmemittel wenigstens eine Induktionsspule vorgesehen ist oder für alle Aufnahmemittel ein oder mehrere gemeinsame Induktionsspulen vorgesehen sind.

3. Mobile Ladestation nach einem der vorhergehenden Ansprüche, **dadurch gekennzeichnet, dass** die erste Übertragungstechnologie Kurzstreckenfunk ist, idealerweise im ISM-Frequenzband, und die abweichende Übertragungstechnologie Bluetooth und/oder WLAN und/oder NFC und/oder RFID und/oder UHF und/oder eine kabelgebundene Verbindung ist.

4. Mobile Ladestation nach einem der vorhergehenden Ansprüche, **dadurch gekennzeichnet, dass** wenigstens ein Ballspielgerät in wenigstens einem Aufnahmemittel mechanisch und/oder magnetisch aufnehmbar bzw. fixierbar ist, wobei das Aufnahmemittel vorzugsweise eine Ausrichtfunktion umfasst, die das Ballspielgerät in eine optimale Lage für die Energieversorgung des Ballspielgerätes aus der Ladestation und/oder den Datenaustausch zwischen Ladestation und Ballspielgerät verbringt.

5. Mobile Ladestation nach einem der vorhergehenden Ansprüche, **dadurch gekennzeichnet, dass** die Ladestation eine Ladelogik umfasst, die ein im Aufnahmemittel eingelegtes Ballspielgerät erkennt und/oder den Ladestand eines aufgenommenen Ballsportgerätes erfasst und den Ladeprozess vorzugsweise startet und/oder dem Nutzer gegebenenfalls in Verbindung mit einem Nutzerendgerät visuell und/oder akustisch signalisiert, welches Ballgerät den höchsten bzw. geeignetsten Ladestand hat und für den Spielbetrieb verwendet werden sollte, und/oder die Ladelogik den Ladezustand der internen Energiequelle überwacht und bei Unterschreiten eines definierbaren Mindestladezustand die Energieversorgung aus der internen Energiequelle durch die Ladelogik reglementierbar ist, insbesondere ist die Ladefunktion externer Geräte deaktivierbar.

6. Mobile Ladestation nach einem der vorhergehenden Ansprüche, **dadurch gekennzeichnet, dass** die Ladestation ein oder mehrere Schnittstellen (22, 24) für externe Geräte vorsieht, beispielsweise ein oder mehrere USB-Ports, wobei über die wenigstens eine Schnittstelle (22, 24) ein oder mehrere externe Geräte mit Energie aus der internen Energiequelle versorgbar sind und/oder die interne Energiequelle der Ladestation durch ein externes Gerät aufladbar ist und/oder ein bidirektionaler Datenaustausch zwischen Ladestation und wenigstens einem externen Gerät möglich ist.

7. Mobile Ladestation nach einem der vorhergehenden Ansprüche, **dadurch gekennzeichnet, dass** die Ladestation ein internes Ortungsmodul, insbesondere GPS-Modul, umfasst und/oder Ortungsdaten von einem externen Ortungsmodul über ein Kommunikationsmodul abrufbar sind, wobei Ortungsdaten an wenigstens ein Ballspielgerät über das Kommunikationsmodul übertragbar sind, und/oder die Ladestation wenigstens ein Speichermittel zur Speicherung von über wenigstens ein Kommunikationsmodul empfangener Daten umfasst, insbesondere empfangener Spieldaten eines konnektierten Ballspielgerätes.

8. Mobile Ladestation nach einem der vorhergehenden Ansprüche, **dadurch gekennzeichnet, dass** die Ladestation wenigstens ein Mikrophon zur Aufzeichnung etwaiger Spielgeräusche des wenigstens einen Ballspielgerätes umfasst, insbesondere ist das Mikrophon zur Aufzeichnung des Klangs im Treffmoment eines Golfballes geeignet.

9. Mobile Ladestation nach einem der vorhergehenden Ansprüche, **dadurch gekennzeichnet, dass** die Ladestation einen Netzwerkprozessor mit Routinglogik zum Aufbau eines vermaschten Netzwerkes mit anderen Kommunikationspartnern, insbesondere weiteren Ladestationen umfasst.

10. Mobile Ladestation nach einem der vorhergehenden Ansprüche, **dadurch gekennzeichnet, dass** die Ladestation Befestigungsmittel zur Befestigung der Ladestation an der Sportausrüstung, insbesondere einem Golfbag, einem Golfcaddy, oder einem Golfkart, und/oder an einem mobilen Nutzerendgerät, vorzugsweise Mobiltelefon, und/oder an einem Kleidungsstück aufweist oder direkt in die Sportausrüstung bzw. in ein Kleidungsstück integriert bzw. integrierbar ist.

11. System zur Ortung eines Ballspielgerätes umfassend wenigstens ein Ballspielgerät mit einem integrierten Ortungsmodul sowie wenigstens einem mobilen Gateway für die Kommunikation des wenigstens einen Ballspielgerätes mit wenigstens einem Nutzerendgerät, wobei das mobile Gateway gemäß der Ladestation nach einem der vorhergehenden Ansprüche ausgestaltet ist.

12. System nach Anspruch 11, wobei das Ballspielgerät, insbesondere ein Golfball, mit wenigstens einer internen aufladbaren Energiequelle zur Energieversorgung des internen Ortungsmoduls und einem internen Kommunikationsmodul ausgestattet ist, wobei das Ballspielgerät zur Aufnahme und Aufladung in sowie zur Kommunikations mittels eines ersten Übertragungsstandards mit dem mobilen Gateway geeignet ist.

13. System nach einem derAnsprüche 11 oder 12, **dadurch gekennzeichnet, dass** zur Energieversorgung des internen Ortungsmoduls des Ballspielgerätes eine interne aufladbare Energiequelle in Form wenigstens eines Lithium-Ionen Ackus (11) mit Keramik-Feststoffelektrolyt vorgesehen ist, und/oder das Ballspielgerät wenigstens ein RF-Modul zur Kommunikation per Kurzstreckenfunk umfasst.

14. System nach Anspruch 12 oder 13, **dadurch gekennzeichnet, dass** der Akku (11) aus einzelnen Schichten (11a, 11b, 11c, 11d) gestapelt ist, um diesen an den verfügbaren Hohlraum im Inneren des Ballspielgerätes anzupassen, insbesondere sind mehrere Akkuschichten (11a, 11b, 11c, 11d) in Form einer Halbschale oder Pyramide gestapelt, wobei das Ballspielgerät eine obere und untere Akkuhalbschale bzw. Pyramide umfasst, zwischen denen die Elektronik aufgenommen ist.

15. System nach einem der Ansprüche 12 bis 14, **dadurch gekennzeichnet, dass** das Ballspielgerät eine auf inneren Halbschalen (12) angeordnete Antennenstruktur umfasst, wobei die Halbschalen (12) insbesondere die Elektronik (10) und den Akku (11) umhüllen, wobei idealerweise pro Halbschale (12) jeweils eine Antennenelemente vorgesehen ist, um eine(n) lageunabhängige(n) optimale(n) Abstrahlung/Empfang eines Antennensignals zu gewährleisten, wobei vorzugsweise die Antennenstruktur für das RF-Modul als auch das Ortungsmodul Verwendung findet.

## Claims

1. A mobile charging station for at least one ball game device, in particular in the form of a golf ball, having at least one internal energy source and at least one holding means for holding and fixing at least one ball game device having integrated electronics (10), wherein the at least one held ball game device can be charged or can be supplied with energy by the at least one internal energy source, **characterised in that** the mobile charging station has a first communication module for wireless communication with at least one ball game device in accordance with a first transmission technology and at least one second communication module for communication with a user terminal in accordance with a differing transmission technology and a coupling of the two communication modules is provided within the charging station, so as to be able to forward data between the user terminal and the ball game device.

2. The mobile charging station according to claim 1, **characterised in that** the charging station has one or more induction coils for inductive charging of a ball game device held therein, wherein preferably at least one induction coil is provided per holding means or one or more common induction coils is/are provided for all holding means.

3. The mobile charging station according to either one of the preceding claims, **characterised in that** the first transmission technology is short-distance radio, ideally in the ISM frequency band, and the differing transmission technology is Bluetooth and/or WLAN and/or NFC and/or RFID and/or UHF and/or a wired connection.

4. The mobile charging station according to any one of the preceding claims, **characterised in that** at least one ball game device can be held or can be fixed mechanically and/or magnetically in at least one holding means, wherein the holding means preferably comprises an alignment function, which brings the ball game device into an optimal position for the energy supply of the ball game device from the charging station and/or the data exchange between charging station and ball game device.

5. The mobile charging station according to any one of the preceding claims, **characterised in that** the charging station comprises a charging logic which identifies a ball game device placed in the holding means and/or detects the state of charge of a held ball game device and preferably starts the charging process and/or visually and/or acoustically signals to the user, optionally in conjunction with a user terminal, which ball device has the highest or most suitable state of charge and should be used for play, and/or the charging logic monitors the state of charge of the internal energy source and, in the event that the state of charge drops below a definable minimum state of charge, the energy supply from the internal energy source can be regulated by the charging logic, in particular the charging function of external devices can be deactivated.

6. The mobile charging station according to any one of the preceding claims, **characterised in that** the charging station provides one or more interfaces (22, 24) for external devices, for example one or more USB ports, wherein, via the at least one interface (22, 24), one or more external devices can be supplied with energy from the internal energy source and/or the internal energy source of the charging station can be charged by an external device and/or a bidirectional data exchange between charging station and at least one external device is possible.

7. The mobile charging station according to any one of the preceding claims, **characterised in that** the charging station comprises an internal locating module, in particular a GPS module, and/or locating data can be called up from an external locating module via a communication module, wherein locating data can be transmitted to at least one ball game device via the communication module, and/or the charging station comprises at least one storage means for storing data received via at least one communication module, in particular game data received from a connected ball game device.

8. The mobile charging station according to any one of the preceding claims, **characterised in that** the charging station comprises at least one microphone for recording any game noise of the at least one ball game device, the microphone being suitable in particular for recording the sound of a golf ball being hit.

9. The mobile charging station according to any one of the preceding claims, **characterised in that** the charging station comprises a network processor having routing logic for establishing a meshed network with other communication partners, in particular further charging stations.

10. The mobile charging station according to any one of the preceding claims, **characterised in that** the charging station has fastening means for fastening the charging station to a piece of sporting equipment, in particular a golf bag, a golf caddy or a golf cart, and/or to a mobile user terminal, preferably a mobile telephone, and/or to an item of clothing or is integrated or can be integrated directly into the piece of sporting equipment or into an item of clothing.

11. A system for locating a ball game device comprising at least one ball game device having an integrated locating means and at least one mobile gateway for the communication of the at least one ball game device with at least one user terminal, wherein the mobile gateway is designed in accordance with the charging station according to any one of the preceding claims.

12. The system according to claim 11, wherein the ball game device, in particular a golf ball, comprises at least one internal rechargeable energy source for supplying energy to an internal locating module and an internal communication module, wherein the ball game device can be held and charged by, and by means of a first transmission standard can communicate with the mobile gateway.

13. System according to any of claims 11 or 12, wherein an internal rechargeable energy source in the form of at least one lithium-ion battery (11) with ceramic solid-state electrolyte is provided in order to supply energy to the locating module and/or the ball game device comprises at least one RF module for communication by short-distance radio.

14. System according to claim 12 or 13, **characterised in that** the battery (11) is stacked from individual layers (11am 11b, 11c, 11d) so as to be adapted to the available cavity within the ball game device, in particular a plurality of battery layers (11a, 11b, 11c, 11d) being stacked in the form of a half-shell or pyramid, wherein the ball game device comprises an upper and lower battery half-shell or pyramid, between which the electronics are received.

15. System according to any one of claims 12 to 14, **characterised in that** the ball game device comprises an antenna structure arranged on inner half-shells (12), wherein the half-shells (12) in particular encase the electronics (10) and the battery (11), wherein ideally a separate antenna element is provided for each half-shell (12) so as to ensure an optimal position-independent emission/receipt of an antenna signal, wherein the antenna structure is perferaby. used for the RF module and for the locating module.

## Revendications

1. Station de charge mobile pour au moins un appareil de jeu de balle, en particulier sous la forme d'une balle de golf, avec au moins une source d'énergie interne et au moins un moyen de réception pour la réception et la fixation d'au moins un appareil de jeu de balle avec une électronique intégrée (10), l'au moins un appareil de jeu de balle reçu pouvant être rechargé ou alimenté en énergie par l'au moins une source d'énergie interne, **caractérisée en ce que** la station de charge mobile présente un premier module de communication pour la communication sans fil avec au moins un appareil de jeu de balle selon une première technologie de transmission et au moins un deuxième module de communication pour la communication avec un terminal d'utilisateur selon une technologie de transmission différente et un couplage des deux modules de communication est réalisé à l'intérieur de la station de charge afin de pouvoir transférer des données entre le terminal d'utilisateur et l'appareil de sport de balle.

2. Station de charge mobile selon la revendication 1, **caractérisée en ce que** la station de charge présente une ou plusieurs bobines d'induction pour la recharge inductive d'un appareil de jeu de balle reçu, de préférence au moins une bobine d'induction étant prévue par moyen de réception ou une ou plusieurs bobines d'induction communes étant prévues pour tous les moyens de réception.

3. Station de charge mobile selon l'une quelconque des revendications précédentes, **caractérisée en ce que** la première technologie de transmission est la radio à courte portée, idéalement dans la bande de fréquence ISM, et la technologie de transmission différente est Bluetooth et/ou WLAN et/ou NFC et/ou RFID et/ou UHF et/ou une connexion câblée.

4. Station de charge mobile selon l'une quelconque des revendications précédentes, **caractérisée en ce qu'**au moins un appareil de jeu de balle peut être reçu ou fixé mécaniquement et/ou magnétiquement dans au moins un moyen de réception, le moyen de réception comprenant de préférence une fonction d'orientation qui amène l'appareil de jeu de balle dans une position optimale pour l'alimentation en énergie de l'appareil de jeu de balle à partir de la station de charge et/ou l'échange de données entre la station de charge et l'appareil de jeu de balle.

5. Station de charge mobile selon l'une quelconque des revendications précédentes, **caractérisée en ce que** la station de charge comprend une logique de charge qui reconnait un appareil de jeu de balle placé dans le moyen de réception et/ou détecte l'état de charge d'un appareil de sport de balle reçu et de préférence démarre le processus de charge et/ou signale à l'utilisateur, éventuellement en liaison avec un terminal d'utilisateur, de manière visuelle et/ou acoustique, quel appareil de balle a l'état de charge le plus élevé ou le plus adapté et doit être utilisé pour le fonctionnement de jeu, et/ou la logique de charge surveille l'état de charge de la source d'énergie interne et, en cas de passage en dessous d'un niveau de charge minimal définissable, l'alimentation en énergie à partir de la source d'énergie interne peut être régulée par la logique de charge, en particulier la fonction de charge d'appareils externes peut être désactivée.

6. Station de charge mobile selon l'une quelconque des revendications précédentes, **caractérisée en ce que** la station de charge prévoit une ou plusieurs interfaces (22, 24) pour des appareils externes, par exemple un ou plusieurs ports USB, un ou plusieurs appareils externes pouvant être alimentés en énergie à partir de la source d'énergie interne par l'intermédiaire de l'au moins une interface (22, 24) et/ou la source d'énergie interne de la station de charge pouvant être rechargée par un appareil externe et/ou un échange de données bidirectionnel étant possible entre la station de charge et au moins un appareil externe.

7. Station de charge mobile selon l'une quelconque des revendications précédentes, **caractérisée en ce que** la station de charge comprend un module de localisation interne, en particulier un module GPS, et/ou des données de localisation sont disponibles à partir d'un module de localisation externe par l'intermédiaire d'un module de communication, les données de localisation pouvant être transmises à au moins un appareil de jeu de balle par l'intermédiaire du module de communication, et/ou la station de charge comprend au moins un moyen de stockage pour le stockage de données reçues par l'intermédiaire d'au moins un module de communication, en particulier des données de jeu reçues d'un appareil de jeu de balle connecté.

8. Station de charge mobile selon l'une quelconque des revendications précédentes, **caractérisée en ce que** la station de charge comprend au moins un microphone pour l'enregistrement d'éventuels bruits de jeu de l'au moins un appareil de jeu de balle, en particulier le microphone est approprié pour l'enregistrement du son au moment de l'impact d'une balle de golf.

9. Station de charge mobile selon l'une quelconque des revendications précédentes, **caractérisée en ce que** la station de charge comprend un processeur de réseau avec une logique de routage pour établir un réseau maillé avec d'autres partenaires de communication, en particulier d'autres stations de charge.

10. Station de charge mobile selon l'une quelconque des revendications précédentes, **caractérisée en ce que** la station de charge présente des moyens de fixation pour la fixation de la station de charge à l'équipement sportif, en particulier à un sac de golf, un chariot de golf ou un kart de golf, et/ou à un terminal d'utilisateur mobile, de préférence un téléphone mobile, et/ou à un vêtement, ou est intégrée ou peut être intégrée directement dans l'équipement sportif ou dans un vêtement.

11. Système de localisation d'un appareil de jeu de balle comprenant au moins un appareil de jeu de balle avec un module de localisation intégré ainsi qu'au moins une passerelle mobile pour la communication de l'au moins un appareil de jeu de balle avec au moins un terminal d'utilisateur, la passerelle mobile étant conçue conformément à la station de charge selon l'une quelconque des revendications précédentes.

12. Système selon la revendication 11, dans lequel l'appareil de jeu de balle, en particulier une balle de golf, est équipé d'au moins une source d'énergie interne rechargeable pour l'alimentation en énergie du module de localisation interne et d'un module de communication interne, l'appareil de jeu de balle étant adapté pour la réception et la recharge dans et pour la communication au moyen d'un premier standard de transmission avec la passerelle mobile.

13. Système selon l'une quelconque des revendications 11 ou 12, **caractérisé en ce que**, pour l'alimentation en énergie du module de localisation interne de l'appareil de jeu de balle, une source d'énergie interne rechargeable est prévue sous la forme d'au moins un accumulateur lithium-ion (11) avec un électrolyte solide céramique, et/ou l'appareil de jeu de balle comprend au moins un module RF pour la communication par radio à courte portée.

14. Système selon la revendication 12 ou 13, **caractérisé en ce que** l'accumulateur (11) est empilé à partir de couches individuelles (11a, 11b, 11c, 11d) pour l'adapter à l'espace vide disponible à l'intérieur de l'appareil de jeu de balle, en particulier plusieurs couches d'accumulateur (11a, 11b, 11c, 11d) sont empilées sous la forme d'une demi-coque ou d'une pyramide, l'appareil de jeu de balle comprenant une demi-coque ou pyramide d'accumulateur supérieure et inférieure entre lesquelles l'électronique est reçue.

15. Système selon l'une quelconque des revendications 12 à 14, **caractérisé en ce que** l'appareil de jeu de balle comprend une structure d'antenne agencée sur des demi-coques intérieures (12), les demi-coques (12) enveloppant notamment l'électronique (10) et l'accumulateur (11), un élément d'antenne étant idéalement prévu pour chaque demi-coque (12) afin d'assurer une émission/réception optimale d'un signal d'antenne indépendamment de la position, la structure d'antenne étant de préférence utilisée pour le module RF ainsi que pour le module de localisation.
